# EUROPEAN PATENT SPECIFICATION

(11) **EP 4 185 756 B1**
(45) Date of publication and mention of the grant of the patent: **12.03.2025**
(21) Application number: 21758426.7
(22) Date of filing: 21.07.2021
(51) Int. Cl.: E04G 21/04, B28B 1/00, B33Y 10/00, B33Y 30/00, B33Y 70/10, B33Y 80/00

(54) **3D-PRINTING SYSTEM AND METHOD TO AUTOMATICALLY BUILD A BUILDING**
3D-DRUCKSYSTEM UND VERFAHREN ZUM AUTOMATISCHEN BAU EINES GEBÄUDES
SYSTÈME D'IMPRESSION 3D ET PROCÉDÉ DE CONSTRUCTION AUTOMATIQUE D'UN BÂTIMENT

(30) Priority: 21.07.2020 IT 202000017647
(43) Date of publication of application: 31.05.2023
(73) Proprietor: Italiano, Antonino, 45100 Rovigo (RO) (IT)
(72) Inventor: Italiano, Antonino, 45100 Rovigo (RO) (IT)
(74) Representative: Studio Torta S.p.A.
(86) International application number: PCT/IB2021/056597
(87) International publication number: WO 2022/018661

(56) References cited:
- WO-A2-2006/100556
- US-A1- 2005 280 185

## Description

### CROSS-REFERENCE TO RELATED APPLICATIONS

This patent application claims priority from Italian patent application no. 102020000017647 filed on 21/07/2020.

### TECHNICAL FIELD

The present invention relates to a 3D-printing system and method, with jetting technique, to automatically build a building. In particular, the present invention concerns the automated building by jetting 3D printing, with powder bed laying, of one or more vertical walls of a building on the basis of a 3D digital model of the walls.

### PRIOR ART

Systems and methods are known for the automated building of buildings which are essentially based on the use of an additive technology (additive manufacturing), which provides for carrying out a controlled laying of building material according to printing processes of three-dimensional elements, so-called "3D-printing systems".

Such systems, generally indicated as "3D-printing systems", provide for laying horizontal layers of building material, one on top of the other, so as to form vertical walls, in which such operations are carried out under the control of an electronic control system on the basis of a 3D digital model of the building.

The 3D-printing systems described above are divided into two categories, which depend on the laying modality of the building material adopted.

A first category is represented by the 3D-printing systems that carry out a laying of the building material, generally concrete, by extrusion. Such systems generally provide for the use of one single extrusion nozzle which is mounted on a movable head, and is designed to extrude continuously the concrete at the semisolid state so as to form a continuous semisolid strip of concrete on an underlying horizontal surface plane; a handling system of the head on two or more axes; and a control system which drives the head by means of the handling system so as to move and orient the nozzle on the basis of the information contained in the 3D digital model.

The 3D-printing systems belonging to the first category are advantageous with respect to the traditional manual building methods since, thanks to their automation, they allow reducing the time for building the building and the relative costs. However, such systems have the drawback of allowing the building of structurally limited buildings, similar to "monoliths" since they are built with one single material, generally concrete. Therefore, these systems allow building only monolayer walls, the completion of which requires further interventions for applying on the monolayer wall the remaining completion layers envisaged in the building, such as for example, the heat insulation layers and the finishing layers (internal and external plastering).

A second category represented by the "powder bed" 3D-printing systems with jetting technique or via spraying (indirect 3D-printing technique or additive manufacturing) provides for the walls to be built by spraying or laying a binder-based liquid agent on a powder bed. These systems essentially provide for laying a generally powdered granular compound on a horizontal plane so as to form a bed or layer of powder and spraying the liquid agent on the laid layer so as to form a rigid matrix which incorporates the granules causing their setting and forming a set/hardened horizontal layer.

A jetting 3D-printing system belonging to the second category is described for example in the Italian patent application No. ITPI2005A000031 or WO 2006/100556 A2. A drawback of the apparatus described in the Italian patent application No. ITPI2005A000031 or WO 2006/100556 A2 is that it requires the assembling and the dismantling of the containment walls of an external container, said operations affecting labour and transportation costs. The containment walls of the container are also specifically sized on the basis of the sizes associated with the outer volume of the building and thus make the apparatus unsuitable for being used for the building of other buildings, having sizes different from those of its container.

Another technical problem of the apparatus described in the Italian patent application No. ITPI2005A000031 or WO 2006/100556 A2 is the need to use a relatively high amount of granular material, higher that is than the amount of material actually necessary for building the walls of the building. In fact, the apparatus provides for overlapping powdered layers equivalent in size to the entire area inside the container thus causing the complete filling of the latter. At the end of the building of the building it is thus necessary to carry out a suitable operation for emptying the non-hardened granular material present in the container, material which is in excess. This condition, if added to the supply and handling time and costs of the granular material, affects, on the whole in a non-negligible manner, the time and the costs for building the building.

Furthermore, the large amount of granular material used entails an increase in the manufacturing complexities of the apparatus in structural terms since it requires an oversizing of the container and of its outer vertical uprights.

Another jetting 3D-printing system is described in the Italian patent application No. ITPI2007A000108. This application relates to a printing apparatus which replaces the fixed outer container with a containment wall made of granular material which is progressively built by the apparatus during the building of the building.

If, on the one hand, this solution allows eliminating the outer container overcoming in such manner the relative drawbacks, on the other hand it is unsatisfactory as it requires, at the end of the building of the building, both the demolition of the outer containment wall, and the removal of the powdered granular material which is progressively stored between the same and the outer peripheral portion of the built building, said operations affecting in a non-negligible manner the costs for building the building.

Furthermore, the aforementioned solutions belonging to the second category have the same limitation present in the solutions of the first category since they allow building only monolithic walls provided with one single material. Therefore, also in this case, the completion of the walls requires further interventions, for example, heat insulation layers, internal and external plastering.
US 2005/0280185 A1 describes a 3D printer for the rapid prototyping of pieces of large dimensions.

### DESCRIPTION OF THE INVENTION

The object of the present invention is thus to provide a jetting 3D-printing system and method with powder bed laying for the automated building of a vertical portion of a building which overcomes the drawbacks and the technical problems described above.
This objective is achieved by the present invention since it relates to a 3D-printing system and method for the building of a building defined according to the appended claims.

### BRIEF DESCRIPTION OF THE DRAWINGS

The present invention will now be described with reference to the accompanying drawings, which illustrate a non-limiting example embodiment thereof, wherein:
- Figure 1 is a schematic perspective view of a 3D-printing system for building at least one vertical wall of a building according to the present invention,
- Figure 2A schematically shows a horizontal section of a multilayer vertical wall of a building built by the 3D-printing system shown in Figure 1,
- Figure 2B schematically shows a vertical section III-III of a multilayer vertical wall of a building built by the 3D-printing system shown in Figure 1,
- Figure 3 is a further schematic perspective view of the 3D-printing system shown in Figure 1,
- Figure 4 is a further top plan schematic perspective view of the 3D-printing system shown in Figure 1,
- Figure 5 is the section I-I, with parts removed for clarity, of the 3D-printing system shown in Figure 4,
- Figure 6 is the section II-II, with parts removed for clarity, of the 3D-printing system shown in Figure 4,
- Figure 7 is a perspective view, with parts removed for clarity, of the 3D-printing system shown in Figure 3,
- Figure 8 schematically shows a perspective view of the handling system for the vertical movement of the track,
- Figure 9 schematically shows the spray device and the handling system thereof,
- Figure 10 schematically shows the unloading device and the handling system thereof,
- Figures 11, 12 and 13 schematically show as many perspective views of an unloading device comprised in the 3D-printing system,
- Figure 14 is an exploded view, with parts removed for clarity, of a spray device comprised in the 3D-printing system,
- Figure 15 shows a detail, on an enlarged scale, of the printing head of the spray device shown in Figure 14.

### PREFERRED EMBODIMENTS OF THE INVENTION

The present invention will now be described in detail with reference to the accompanying Figures so as to allow a person skilled in the art to manufacture it and use it. Various modifications to the described embodiments will be immediately apparent to the persons skilled in the art and the general principles described can be applied to other embodiments and applications without thereby departing from the scope of protection of the present invention, as claimed in the appended claims. Therefore, the present invention is not to be considered limited to the embodiments described and illustrated, but it is to be given the broadest scope of protection compliant with the principles and the characteristics described and claimed herein.

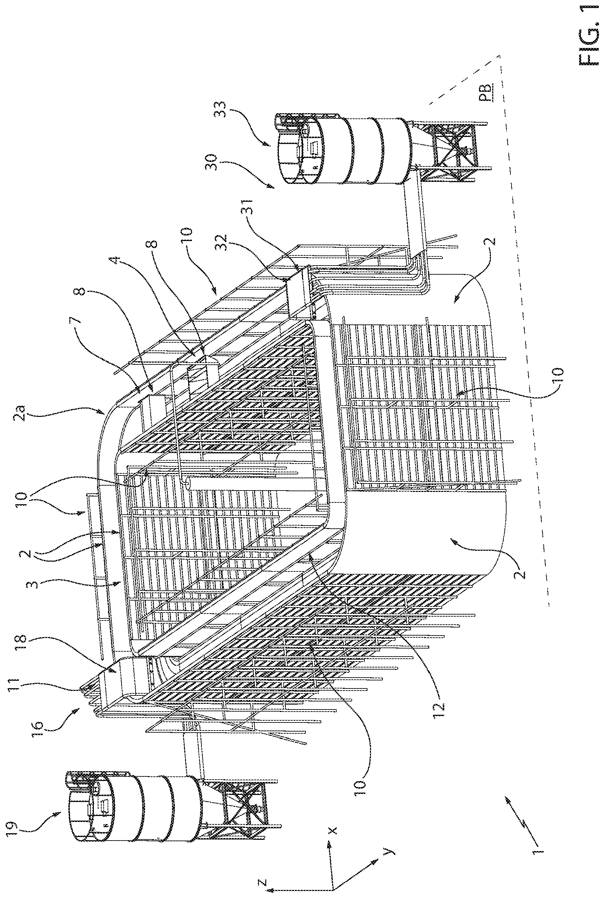

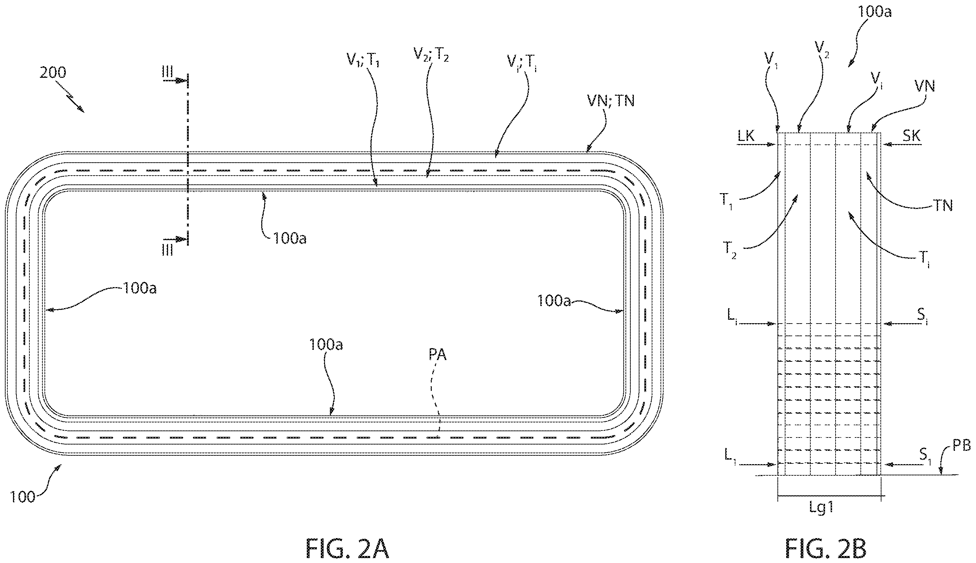

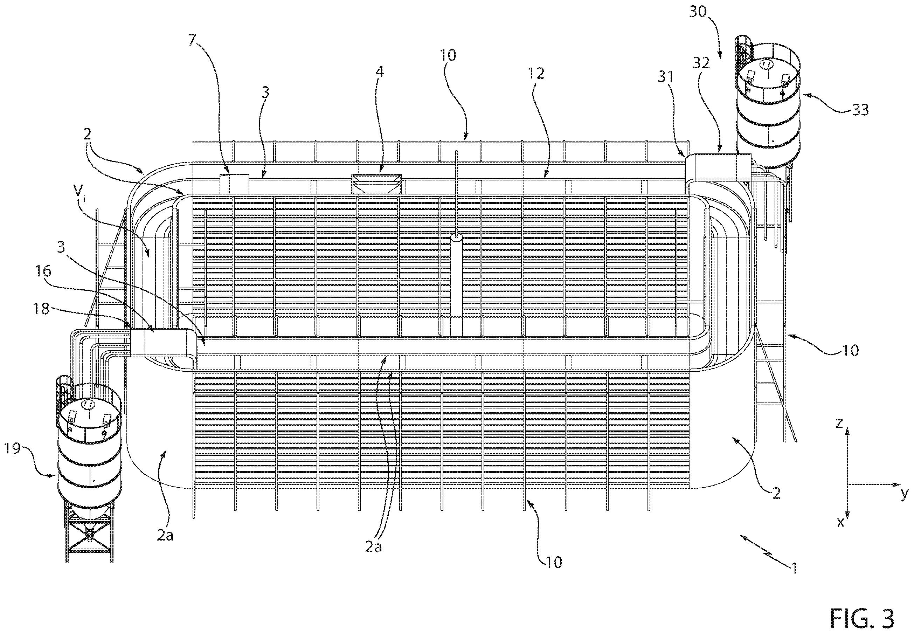

With reference to Figures 1, 3-7, reference numeral 1 indicates, as a whole, a powder bed 3D (three-dimensional) printing system (with jetting technique or additive manufacturing) for automatically building at least one vertical wall 100a of a building 200 partially illustrated in Figure 2.

In the following disclosure, reference will be made, without thereby losing generality, to a series of vertical walls 100a. In the schematic example shown in Figure 2, the walls 100a are arranged along a horizontal path PA having (in plan) an approximately annular shape. In the illustrated example, the annular shape of the horizontal path PA along which the vertical walls 100a extend (one after the other) is approximately rectangular with the edges conveniently rounded as shown in Figure 2a. The walls 100a can form, for example, an outer vertical peripheral portion 100 of the building 200.

It is understood that the present invention is not limited to a rectangular path PA with rounded edges, but can provide for any annular geometrical shape such as, for example, a polygonal shape, a circular shape, an elliptical shape or the like.

It is also understood that the present invention is not limited neither to the number nor to the shape of the walls 100a but can be applied also for building one single wall 100a having any length and shape.

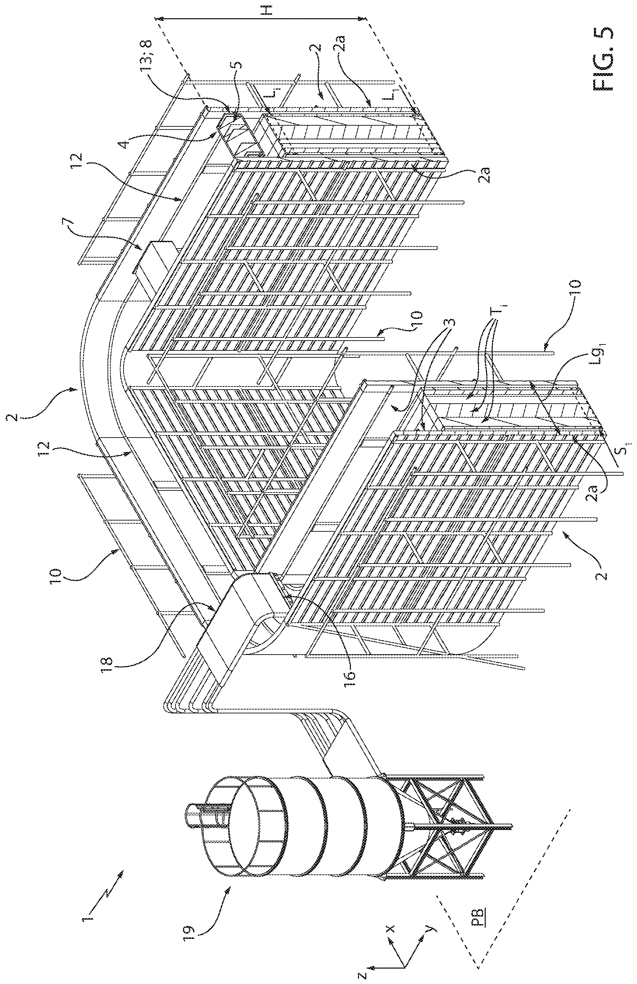

With reference to the preferred embodiment shown in Figure 1, the printing system 1 comprises a mould or formwork 2, which is arranged resting on a preferably horizontal plane PB, corresponding for example to a support base, and extends vertically from the same for a pre-established height H (Figure 5). It is understood that the height H of the formwork 2 can be conveniently varied based on the height of the vertical walls 100a to be built according to what defined in the 3D digital model.

The formwork 2 extends horizontally, preferably continuously, remaining resting on the horizontal plane PB, along the preferably annular path PA so as to form a preferably annular mould. In the illustrated example, the formwork 2 substantially has four sections or sides orthogonal to each other so as to approximately form a rectangle. The formwork 2 is structured so as to internally delimit a forming chamber 3 which reversely follows the shape of the walls 100a of the building 200 to be built.

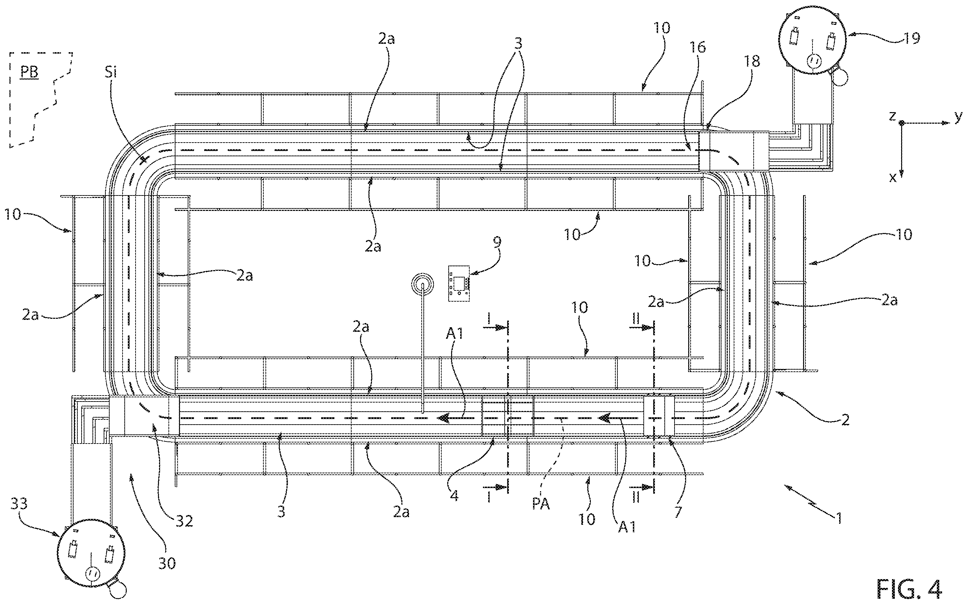

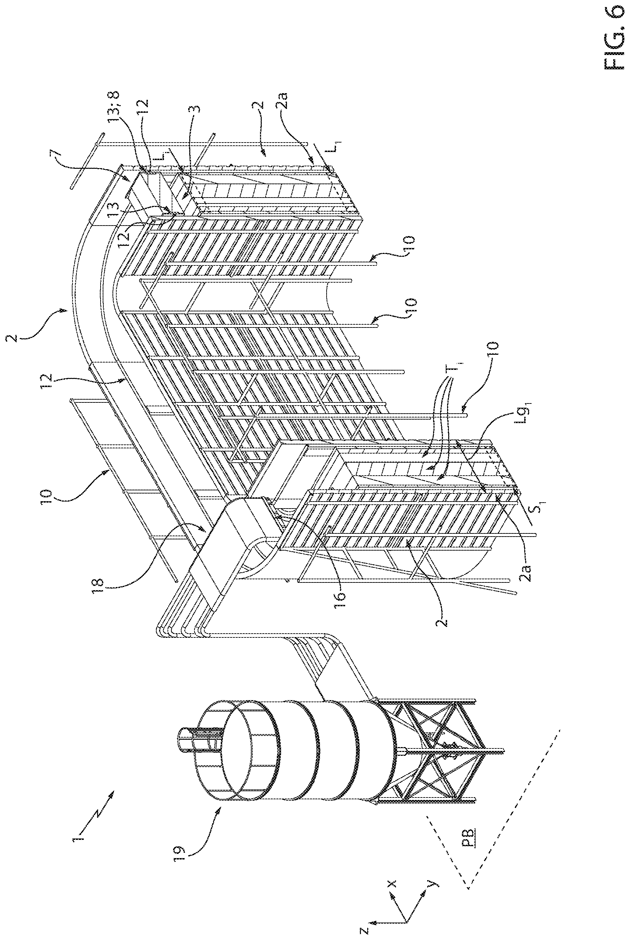

In the example illustrated in Figure 4, the forming chamber 3 has an approximately annular horizontal section. The forming chamber 3 also has a vertical section, orthogonal to the annular path PA, substantially rectangular (Figures 5 and 6).

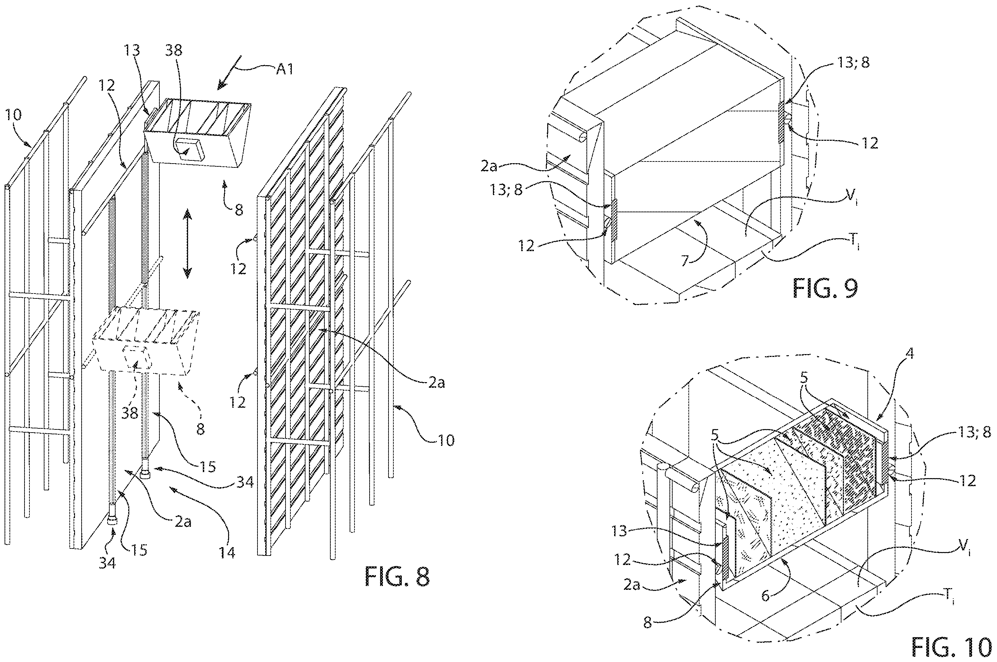

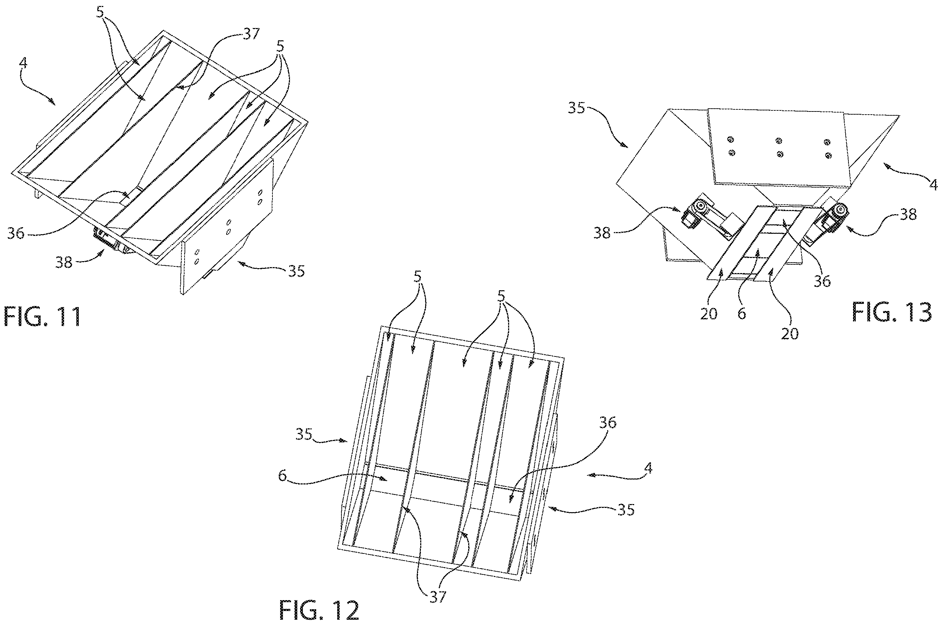

According to a preferred embodiment shown in Figures 1, 3, 4, 5, and 7, the system 1 also comprises an unloading device 4, which is provided with a plurality of sections or containment compartments 5 (Figures 11, 12 and 13). The containment compartments 5 are independent of and separate from each other and preferably open at the top. The containment compartments 5 are designed to contain respective granular compounds (schematically shown in Figure 10) and have at the bottom relative unloading mouths or openings 6, which communicate with the internal space of the containment compartments 5 for unloading in use, on command, the granular compounds into the forming chamber 3.

It should be specified that in the following disclosure, the term "granular compounds" means a granular mixture which is suitable for the 3D-printing with jetting technique which provides for the powder bed laying. The granular mixture can comprise, for example, an inert material and preferably, but not necessarily, one or more binder materials. The inert material is suitable for defining the aggregate with which the vertical walls 100a of the building 200 are built. The inert material can preferably be in powder. The inert material can be, for example, marble-based, rock-based, sand-based or the like.

With regard to the binder material, it can conveniently be in powder. The binder material can be magnesium-based. For example, the binder material can correspond by choice to: a magnesium phosphate cement-based binder and/or a geopolymer based binder. It is understood that the present invention is not limited to the inert and binder materials described above but other embodiments can be provided with other types of inert and binder materials suitable for the 3D-printing with jetting technique. For example, the inert and binder materials can conveniently correspond to the inert and respectively binder materials described in the European patent applications No. EP3168203A1 and No. EP3210949A1.

According to a preferred embodiment shown in Figures 1, 3-7, 14-15, the system 1 also comprises a spray device 7 which is designed to spray, on command and selectively, one or more activating liquid agents made of substances that are designed to react with the granular compounds laid so as to cause the setting and/or the hardening thereof. The activating liquid agents can be made, for example, of a mixture of water and/or powdered minerals. The minerals used in the activating liquid agents can comprise for example potassium, silicates and/or similar substances. The system 1 also comprises a handling system 8, which is designed to selectively move the unloading device 4 and/or the spray device 7 inside the formwork 2, i.e. inside the forming chamber 3, along the annular path PA at least in one predetermined forward direction A1 (in the example of Figure 4 corresponding to the clockwise direction) so as to make it perform a plurality of turns in the formwork 2 along the path PA.

The handling system 8 is also designed to selectively move the unloading device 4 and/or the spray device 7 inside the forming chamber 3 of the formwork 2 along a vertical direction (orthogonal to the horizontal plane PB) over several vertical levels Li so as to be able to vary the height of the unloading device 4 and/or the spray device 7 with respect to the plane PB.

The system 1 also comprises an electronic control system 9 (Figure 4) configured to selectively control, by means of the handling system 8, the movement of the unloading device 4 and/or the movement of the spray device 7 along at least two corresponding axes X, Y shown in the accompanying Figures. The electronic control system 9 is configured to selectively control, by means of the handling system 8, the unloading device 4 and/or the spray device 7 along the annular path PA.

According to the exemplifying embodiment shown in the accompanying Figures, the spray device 7 is separate from the unloading device 4. According to the exemplifying embodiment shown in the accompanying Figures, the handling system 8 is designed to move the spray device 7 along the annular path PA independently of the unloading device 4 and vice versa.

The electronic control system 9 is configured to control the movement of the unloading device 4 independently of the movement of the spray device 7 along the annular path PA. In other words, the unloading device 4 and the spray device can be moved along the annular path PA independently of one another.

Preferably, the movement control provides for the spray device 7 to follow the unloading device 4 along at least the forward direction A1.

The electronic control system 9 is also configured to control the vertical movement of the unloading device 4 and/or of the spray device 7 (along the axis Z in Figure 1) by means of the handling system 8 so as to selectively position them over several levels Li (i variable between 1 and K) having pre-established heights and associated with the respective turns or layers Si.

The electronic control system 9 is also configured to control the unloading device 4 so as to form, during each turn inside the formwork 2, a horizontal granular bed or layer Si (i variable between 1 and K) of granular compounds. In the illustrated example, the horizontal granular bed or layer Si has an annular shape on the plane PB. The granular layer Si laid has a width Lg1 transverse to the forward direction A1 corresponding approximately to the width of the internal forming chamber 3. The granular layer Si has a predetermined thickness (measured vertically), preferably constant along the annular path. The granular layer Si is composed of a plurality of horizontal stratiform granular strips Vi (i comprised between 1 and N) made of granular material. In the illustrated example, the stratiform granular strips Vi are annular (concentric). In the illustrated example, the stratiform granular strips Vi of the granular layer Si are arranged on top of the underlying layer Si-1. In the illustrated example, the stratiform granular strips Vi of the granular layer Si after the completion of the turn have an annular shape (in plan). In the illustrated example, the stratiform granular strips Vi are arranged on the respective annular strips that form the underlying layer Si-1. The vertical overlapping of the granular strips Vi of the granular layers Si causes the composition/forming on the wall 100a of a plurality of vertical layers that can be conveniently made with materials different from each other.

The electronic control system 9 is also configured to control the spray device 7 during the movement so as to selectively spray the granular strips V1 with the activating liquid agents, so as to cause the hardening/setting thereof on the basis of the 3D digital model.

The electronic control system 9 is also configured not to spray the activating liquid agents on one or more granular strips Vi on the basis of the structure of the 3D model, so as not to cause the setting/hardening thereof.

It is understood that the spray device 7 can be controlled so as to selectively spray the activating liquid agents only on some longitudinal portions (not illustrated) of the annular strips Vi along the path PA and leave the remaining portions or sections, "not sprayed" and thus in the granular state (in powder) so as to create internal cavities and/or through-openings in the wall 100a. In use, the granular material of the annular strips Vi which has not been sprayed and thus not hardened by the activating liquid agents, i.e. has remained in powder, can be conveniently removed for forming the internal cavity or the through-opening in the wall 100a.

The Applicant has found that the use of the unloading device 4 and of the spray device 7 described above has the technical effect to allow the building of multilayer vertical walls, i.e. formed of a series of layers that lie on vertical planes parallel to each other, in which each of the vertical layers can have a structure and composition different from the other adjacent vertical layers. This allows building "complete" multilayer walls, i.e. composed of all the layers envisaged in the building according to what designed in the 3D model.

In other words, it is possible to completely build a "finished" wall 100a provided with any number, type and shape (in vertical) of layers such as for example layers composed of materials that have a structural function (bearing structural functions), layers having heat and/or acoustic insulation functions, layers having a surface finishing function. Thanks to the combined and independent action of the unloading device and of the spray device described above it is possible to selectively set/harden the layers composing the wall 100a, and to conveniently form two outer vertical layers of the wall 100a (which remain in contact with the formwork 2 during the building), which remain in a granular state (in powder). This condition allows increasing the simplicity of decoupling the formwork 2 from the wall 100a and simplifying the cleaning of the latter since the granular elements do not remain attached thereto being in powder.

A further technical effect is being able to stop the spraying and thus make sections of stratiform granular strips not sprayed by the activating liquid. The sections of stratiform strips not sprayed remain in the powder/granular state and allow forming on the wall (by a subsequent removal of the granular materials) internal cavities or through-openings corresponding for example to windows or doors. The internal cavities can thus define interspaces/ducts and can be made on the basis of the interspaces/ducts (generally made manually on the wall) envisaged in the heating and wiring systems of the building conveniently designed and included in the 3D model.

With reference to the preferred embodiment shown in Figures 1, 3-10, the formwork 2 is formed of two containment walls 2a which extend vertically from the horizontal plane PB and are arranged facing each other. The two walls 2a extend horizontally along the path PA, parallel to each other at a mutual distance, transverse to the forward direction A1, corresponding approximately to the width Lg1 of the internal forming chamber 3.

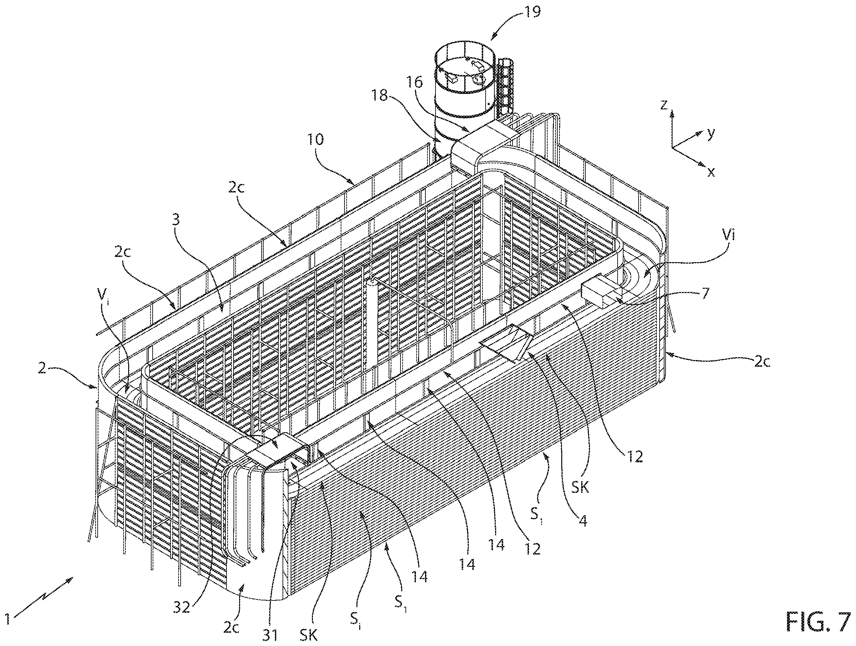

The two containment walls 2a are conveniently modular so as to be easily dismounted/assembled. Conveniently, the walls 2a can comprise a plurality of panels 2c (Figure 7), for example rectangular, which are coupled to each other and are structured to be, in use, easily assembled/dismounted/removed.

Preferably, the formwork 2 also comprises a support structure of the panels 2c which, in the example illustrated in the accompanying Figures, is defined by a modular scaffolding 10 of the type that can be easily assembled/disassembled. It should be specified that the modularity of the formwork 2 deriving from the combined use of the scaffolding 10 and of the panels 2c has the technical effect of freeing the system 1 from the possibility of making one single shape/size of the vertical portion of the building 200. This increases the versatility of the system 1 since it is can be used for building buildings provided with vertical walls having different shapes and sizes.

The scaffolding 10 is also advantageous because on the one hand it allows simplifying the internal/external cleaning and post-production activities, and on the other hand it can be conveniently used by the operators as walkable staging for the assembling of other building components/elements of the building 200, such as for example, window and door frames, downspouts, railings, roof, etc.

With reference to an embodiment shown in Figures 4, 7, 8, and 10, the handling system 8 can comprise: a sliding track 12, which extends along the path PA inside the forming chamber 3 on an approximately horizontal plane, and motorized slides 13, which are firmly associated with/coupled to the spray device 7 and the unloading device 4. The motorized slides 13 are mounted on the sliding track 12 for moving on command the spray device 7 and the unloading device 4 along the path PA in the forward direction A1.

In the illustrated example, the motorized slides 13 are preferably operated electrically, are firmly coupled to the spray device 7 and to the unloading device 4, and are provided with motorized wheels which are coupled to the sliding track 12. The motorized slides 13 are controlled in use by the electronic system 9 so as to move the spray device 7 and the unloading device 4 along the path PA in the direction A1 (clockwise in Figure 4).

It is understood that additionally or alternatively, the electrically operated motorized slides 13 can be controlled in such a way to move the spray device 7 and the unloading device 4 along the path PA also in a direction opposite the direction A1 (anti-clockwise in Figure 4).

With reference to an embodiment shown in Figure 8, the track 12 can comprise a pair of rails which extend continuously coplanar and parallel to each other along the annular path PA and are each arranged adjacent a relative wall of the formwork 2.

In the illustrated example, the rails of the track 12 are supported by a frame 14 preferably resting on the horizontal plane PB. The frame 14 comprises a structured mechanism so that, in use, it is operated by the handling system 8 for vertically moving the lying plane of the track 12 so as to control the height, i.e. the level Li of the spray device 7 and of the unloading device 4 with respect to the horizontal plane PB.

According to a possible embodiment shown in Figure 8, the frame 14 can comprise vertical columns 15 which are coupled to the track 12 for supporting it and handling members 34 for vertically moving the track 12 with respect to the plane PB keeping it horizontal by means of said columns 15. The handling members 34 can comprise for example mechanical screw jacks (Figure 8) or could comprise motorized slides that support the track 12 and are mounted movable on the columns 15 for moving vertically on command, from the bottom upwards and vice versa. It is understood that the present invention is not limited to a handling system formed of the frame 14 and/or of the handling member 34 but can comprise any other device/apparatus which is capable of moving vertically, in a controlled manner, the track 12 keeping it approximately horizontal, such as for example an electric actuator or the like.

With reference to Figures 11-13, the unloading device 4 comprises a hopper 35 provided at the bottom with an unloading mouth 36 and comprising internally a series of vertical bulkheads 37 that divide the internal space of the hopper 35 in said containment compartments 5. The bulkheads 37 also divide at the bottom the unloading mouth 36 in the lower openings 6 of the containment compartments 5.

The unloading device 4 also comprises at the bottom a plurality of plate-like elements 20 designed to close/open the lower openings 6 of the containment compartments 5. According to an exemplifying embodiment shown in Figure 13, the unloading device 4 comprises a pair of plate-like elements 20, for example blades opposite and parallel to each other. The plate-like elements 20 can have, for example, an approximately oblong rectangular shape and are structured to be selectively moved with respect to each other between a closing position of the openings 6 of the unloading mouth 36 and an opening position of said openings 6, and vice versa. The plate-like elements 20 can be operated between the closing and opening position by one or more motorized members 38, for example electric motors which are controlled by the electronic system 9 and can be mechanically connected to the plate-like elements 20 through transmission/operating mechanisms. In use, the electronic system 9 can control the movement of each plate-like element 20 so as to control/adjust the amount of granular compounds unloaded from the containment compartments 5 through the relative openings 6. The adjustment of the opening/closing of the pair of plate-like elements 20 causes the simultaneous opening/closing of the containment compartments 5.

According to a possible alternative embodiment (not illustrated) the openings 6 of the containment compartments 5 of the unloading device 8 are selectively controlled by respective plate-like elements 20 so as to adjust the amount of granular compound unloaded from each containment compartment 5. Each of the plate-like elements 20 is thus arranged on a relative opening 6 and can be selectively and independently operated with respect to the others for controlling the opening/closing of the opening 6. The movement of the plate-like element 20 present in the opening 6 of a containment compartment 5 can thus be controlled by the electronic system 9 on the basis of the granulometry (size) of the granular compound contained in the containment compartment 5. In this manner, it is possible to differ in a controlled manner the amount of granular compounds unloaded from each containment compartment 5 with respect to the other containment compartments 5. Hence, the making of a horizontal granular layer Si is ensured which has the same vertical thickness along the entire width upon the varying of the granulometry of the granular compounds forming the strips.

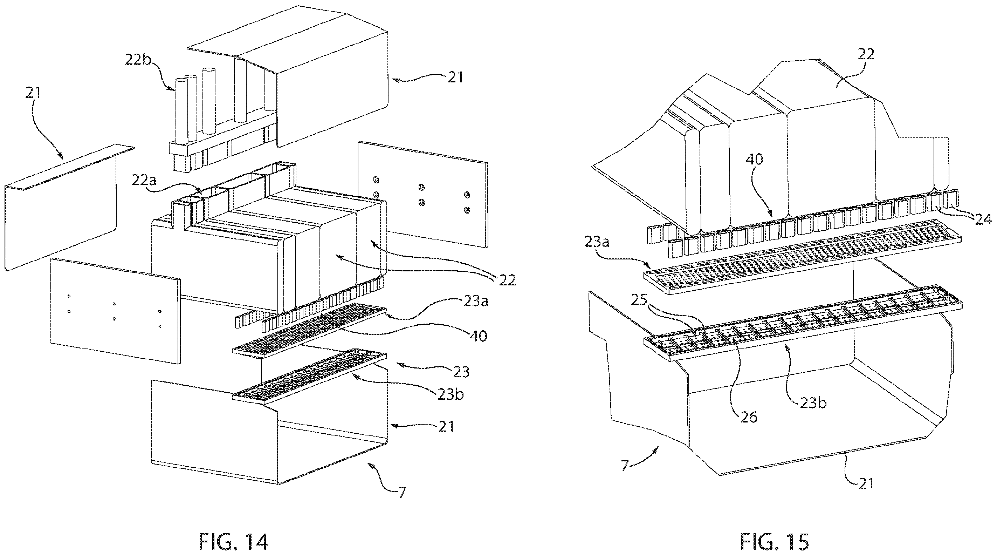

With reference to the preferred embodiment shown in Figures 14-15, the spray device 7 comprises: a box-type frame 21, for example, having the shape of a parallelepiped, a series of tanks 22 which are arranged inside the box-type frame 21 and are designed to contain respective activating liquids, and a printing head 23 which is hydraulically connected to the tanks 22 through a hydraulic system 40 for receiving the activating liquids and comprises a plurality of nozzles (not illustrated) through which it selectively expels the activating liquids so as to spray them on the layer S1.

According to an exemplifying embodiment, the tanks 22 are conveniently provided at the top with loading openings 22a from which loading tubes 22b extend vertically upwards designed in use to be used for pouring the activating liquids into the tanks 22.

According to an exemplifying embodiment, the printing head 23 is arranged in the box-type frame 21 under the tanks 22. The hydraulic system 40 comprises a series of ducts 24 which connect the printing head 23 to the tanks 22.

According to an exemplifying embodiment, the printing head 23 can comprise an upper plate 23a and a lower plate 23b, which are mutually coupled sealingly and internally delimit a plurality of containment chambers 25. Each containment chamber 25 is hydraulically separate from the adjacent containment chambers 25 by internal partition walls 26 and is hydraulically connected, by a relative internal hydraulic branch to a duct of the hydraulic system 40 through which it receives the activating liquid present in the tank 22.

According to an exemplifying embodiment, the containment chambers 25 are arranged in the printing head 23 according to a matrix distribution formed of at least two lines, in each of which the containment chambers 25 are arranged in a row one after the other, alongside the containment chambers 25 of the other line, so as to form therewith a plurality of columns.

In the lower plate 23b, inside each containment chamber 25, a plurality of nozzles is installed, said nozzles being selectively controlled by respective electrically controlled operating members (not illustrated). Preferably, the nozzles are installed in respective through-openings obtained on the lower plate 23b and are in hydraulic communication with the relative containment chamber 25. The operating members can comprise solenoid valves and be housed in respective seats preferably obtained on the upper plate 23a inside the relative containment chamber 25. Preferably, the nozzles can be arranged at a distance from each other of approximately 3 mm. Preferably, the spray device 7 is modular, i.e. the elements of which it is composed can be easily assembled/disassembled. A technical effect of the modularity is represented by the fact that in use, it is possible to compose and thus to configure the spray device 7, each time, on the basis of the number of stratiform granular strips Si of the granular layer, of the type of activating liquids and of the width Lg1 of the granular layer Si. To this purpose, it is possible to vary the number of tanks 22 and/or the size of the printing head 23 (width), an/or the configuration of the internal chambers 25 at the printing head 23 depending on the number of strips of the layer S1, of the type of activating liquids and of the width of the layer S1.

With reference to Figures 1, 3 and 7, the printing system 1 can also conveniently comprise a loading system designed to selectively load the granular compounds in the containment compartments 5 of the unloading device 4.

In the illustrated example, the loading system comprises one or more loading stations 16, each of which comprises a loading apparatus 18 which is connected through a series of ducts to a silo or tank 19 which in turn contains the granular compounds. Preferably, the silo or tank 19 can comprise the different granular compounds, i.e. inert materials and/or the binder materials separated into as many containment compartments.

According to an exemplifying embodiment, the loading apparatus 18 is arranged on top of the formwork 2 so as to face the containment compartments 5 of the unloading device 4 (when it is in a loading position) and is structured so as to receive in input the granular compounds contained in the tank 19. The loading apparatus 18 can be structured in such a way that, under the control of the electronic control system 9, it doses and/or mixes the granular compounds to be loaded in each containment compartment 5 of the unloading device 4. To this purpose, the loading apparatus 18 can be provided with loading ducts which in use align with the corresponding underlying containment compartments 5 when the unloading device 4 is arranged in a loading position in the loading station.

With reference to Figures 1, 3 and 7, the printing system 1 can also conveniently comprise a loading system 30 designed to selectively load the activating liquids in the tanks 22 of the spray device 7. In the illustrated example, the loading system 30 comprises one or more loading stations 31, each of which is provided with a loading apparatus 32 which is connected by means of a series of ducts to at least one silo or tank 33 which contains the activating liquids. Preferably the silo or tank 33 can comprise the various activating liquids separated in as many internal containment chambers (not illustrated).

According to an exemplifying embodiment, the loading apparatus 32 is placed on top of the formwork 2 so as to face the containment tanks 22 of the spray device 7 and is structured in such a way to receive in input the activating liquids contained in the tank 33. The loading apparatus 32 can be structured in such a way that, under the control of the electronic control system 9, it selectively loads the activating liquids in the tanks 22 of the spray device 7.

To this purpose, the loading apparatus 32 can be provided with loading ducts which in use align with the tubes 22b of the underlying tanks 22 when the spray device 7 is arranged in the loading position in the loading station 31.

In use, the 3D-printing method for building the vertical portion 100 of the building 200 comprises the following steps.

A step is provided for defining/designing the 3D digital model which defines the vertical walls 100a of the vertical portion 100 of the building 200. The 3D digital model comprises all the information/technical data relative to the structure and to the composition of the vertical walls 100a. In particular, the 3D digital model can comprise information/technical data concerning the multilayer wall, i.e. the various vertical layers which compose it and their composition, i.e. the activating granular/binder/liquid materials. The three-dimensional digital model can also comprise information/technical data concerning through-openings and/or cavities and/or separation lines present in the vertical portion 100. It is understood that the separation lines can delimit walls 100a in the vertical portion 100 which are separate and distinct from the other walls of the vertical portion 100.

A step is also provided for building the formwork 2. This step can conveniently comprise the manual assembling of the scaffolding 10 and of the panels 2c so as to form the annular walls 2a of the formwork 2. It is understood that the building of the formwork 2 is carried out on the basis of the data/information contained in the 3D digital model.

A step is also provided for configuring the spray device 7 on the basis of the 3D digital model and for building it on the basis of the configuration.

A step is also provided for configuring the unloading device 8, and in particular the containment compartments 5 thereof on the basis of the 3D digital model and for building it on the basis of the configuration.

The step is also provided for installing: the handling system 8 (i.e. of the frame 14, of the track 12, the motorized slides 13, of the handling member 34), of the unloading device 4, of the spray device 7, of the electronic control system 9 and of the tanks 19 and 33 containing the inert materials, the binders, and the activating liquids.

A step is also provided for loading/storing in the electronic control system 9 the 3D digital model of the vertical walls 100a forming the vertical portion 100 to be built. The electronic control system 9 establishes the sequential operations to be implemented, during the building of the vertical portion 100, for controlling: the handling system 8, the unloading device 4 and the spray device 7, on the basis of the information/data contained in the 3D digital model. The control system 9 can also conveniently control the operations carried out in the silos 19 and 33 (mixing of the liquids and of the solids) and/or the loading apparatuses 30 and 32 during the loading operations of the unloading device 4 and of the spray device 7.

In the initial step, i.e. before making the unloading device 4 and the spray device 7 perform the first turn in the forming chamber 3 for forming the first layer S1 on the horizontal plane PB, the track 12 is positioned by the electronic control system 9 by means of the handling system 8 at a first pre-established level L1 (first height).

In the initial step, the electronic control system 9 moves the unloading device 4 by means of the handling system 8 in the relative loading station 16, and operates the loading apparatus 18 so as to selectively load the granular compounds in the relative containment compartments 5 of the unloading device 4 so as to fill them according to pre-established doses. It is understood that the doses can be established on the basis of the width/height/thickness dimensions of the respective vertical layers of the walls to be built and of the "turn" to perform. It is also understood that the granular compounds are loaded in the containment compartments 5 on the basis of the relative compositions of the vertical layers Ti of the walls 100a of the vertical portion 100.

In the initial step, the electronic control system 9 moves the spray device 7 by means of the handling system 8 in the relative loading station 30 and operates the loading apparatus 32 for loading in a selective and dosed manner, according to the amount established, the activating liquids in the relative tanks 22 of the spray device 7.

It is understood that the activating liquids are loaded in the tanks 22 on the basis of the composition and structure of the vertical layers Ti which form the walls 100a of the vertical portion 100.

It is also understood that the present invention is not limited to the loading of the granular compounds formed of the mixture composed of binders and inert materials in the containment compartments 5 of the unloading device 4.

According to an embodiment alternative to the one described above, the binders can be liquid and mixed with the activating liquids, so as to be sprayed by the spray device 7.

The electronic control system 9 controls by means of the handling system 8 the movement of the unloading device 4 along the annular path PA and in the direction A1 so as to form, during the first turn, the layer Si=S1 on the horizontal plane PB associated with the first level Li=L1. The layer S1 formed during the first turn has an annular shape and comprises a series of annular stratiform granular strips Vi and has a predetermined thickness. In this step, the electronic control system 9 can control the forward speed of the unloading device 4 and/or the amount of granular compounds unloaded from the containment compartments 5 on the basis of the vertical thickness of the layer S1 to be made. According to an embodiment, the adjustment of the amount of the granular compounds unloaded from the containment compartments 5 can be carried out controlling the movement of the pair of plate-like elements 20 (shown in Figure 13).

According to the embodiment variant, the selective control of each of the openings 6 of the containment compartments 6 is provided by a relative plate-like element 20 so as to adjust the amount of the granular compounds unloaded from each of the containment compartments 5.

The electronic control system 9 controls by means of the handling system 8 the movement of the unloading device 4 along the annular path PA in the direction A1 so as to form, during the first turn, the layer S1 on the horizontal plane PB associated with the first level Li=L1. The layer S1 formed during the first turn has an annular shape and comprises a series of concentric annular stratiform granular strips Vi (i comprised between 1 and N) associated with the layers of the vertical portion 100 and has a predetermined vertical thickness.

The electronic control system 9 also controls, by means of the handling system 8, the movement of the spray device 7 (with respect to the reference axes X and Y) along the annular path PA in the direction A1 so as to follow the unloading device 4. The electronic control system 9 controls the spray device 7, so as to selectively spray the activating liquids on the annular strips Vi which form the layer S1 on the basis of the 3D digital model. In this step, the electronic control system 9 selectively controls by means of the nozzles the activating liquid on the sections of stratiform granular strips Vi depending on the data/information contained in the 3D digital model. It is understood that the spray device 7 can spray with a certain pressure.

To this purpose, the containment chambers 25 can be constantly kept at a predetermined pressure. To this regard, it should be specified that the containment chambers of the printing head 23 can contain activating liquid(s) composed of different formulations and materials which give, to each liquid, specific characteristics also very different from each other. Such characteristics can correspond to volume, density, viscosity, surface tension, of the liquid. The electronic control system 9 is thus capable of controlling the spray device 7 on the basis of the characteristics of each containment chamber 25 and of the liquid present therein. Furthermore, the electronic control system 9 is designed to control the pressure with which the liquid is expelled from the containment chamber 25 through the nozzle. Such pressure can be selectively controlled/varied on the basis of the characteristics of the stratiform stripe Vi to be set/hardened.

Once completed the first turn, the electronic control system 9 also controls, by means of the handling system 8, the vertical movement of the track 12 so as to arrange it at a second level Li=L2 associated with a pre-established height higher than the first level L1 (L2>L1).

The electronic control system 9 again controls by means of the handling system 8 the movement of the unloading device 4 so as to form a new layer S2 on top of the layer S1 and contextually the spray device 7 so as to selectively spray the stratiform granular strips Vi of the layer S2 previously set/hardened by the activating liquids.

The electronic control system 9 repeats the controls described above on the handling system 8, on the unloading device 4 and on the spray device 7 so as to implement a plurality of turns, moving vertically, at the end of each turn, the track 12 over a new level until reaching the height H of the formwork 2.

The system and the method described above have the advantage of reducing the amount of granular material necessary for building the walls. In particular, the use of a formwork sized on the basis of the wall to be built, i.e. substantially having the same dimensions, and in particular the same length, allows using during the method an amount of material corresponding to the amount actually necessary. This eliminates the need, on the one hand, to manage high amounts of material and to thus limit the costs for the management and purchase of said material, and on the other hand the need to have to remove the exceeding material following the building of the wall.

Another advantage of the system described above is the fact that thanks to the selective laying of the granular material carried out by the unloading device and by the selective activation thereof obtained by means of the spray device, it is possible to build any type of wall in terms of number of layers of different material, of shapes, of internal cavities and of openings. In other words, the selective laying of the granular material in overlapped stratiform strips together with the selective activation of the materials composing the granular strips so as to harden them, allows building multilayer walls of high complexity without any limitations of shape, of number of layers, of type of material and thus allows building complete and finished walls.

It is finally apparent that modifications and variants can be made to the system and to the method described and illustrated above without thereby departing from the scope of the present invention.

For example, according to a different embodiment (not illustrated) the formwork 3 instead of having a closed annular shape shown in the accompanying Figures, can extend along an open (not closed) path and thus have the two opposite longitudinal ends open, i.e. not connected to each other. The open path can thus follow the shape of a single open wall of any type, i.e. rectilinear, or curvilinear, or the like. In this embodiment, the system controls the unloading device 4 and the spray device 7 analogously to what described above. In this embodiment, the system differs from the one described above which provides for an annular formwork 2 and the movement of the unloading device 4 and the spray device 7 in the formwork 2 so as to perform turns, due to the fact that the movement of the unloading device 4 and of the spray device 7 is linear and is carried out between the two opposite ends of the formwork along a forward direction or two opposite forward directions, in an alternated manner.

## Claims

1. A system (1) to automatically build at least one vertical wall (100a) of a building on the basis of a 3D digital model defining said vertical wall (100a), said system is **characterised in that** it comprises:
an approximately vertical formwork (2) that delimits an internal forming chamber (3) for forming said wall (100a) and has a width corresponding approximately to the width of said vertical wall (100a), the formwork (2) extends along a predetermined path (PA) corresponding to the horizontal extension of said vertical wall (100a),
an unloading device (4) which is arranged in said internal forming chamber (3) and is provided with a number of containment compartments (5) separate from and independent of each other, which contain respective granular compounds designed to build said vertical wall (100a) and have relative openings (6) for unloading said granular compounds into said internal chamber (3),
a spray device (7) which is arranged in said internal chamber (3) and comprises a plurality of containment tanks (22) containing respective liquid agents designed to react with said granular compounds to cause their setting/hardening; said spray device (7) is configured to spray, on command and selectively, said liquid agents,
handling means (8) which are designed to:
selectively move said unloading device (4) and said spray device (7) within said internal forming chamber (3) of said formwork (2) along said predetermined path (PA), and
vertically and selectively move said unloading device (4) and said spray device (7) within the internal forming chamber (3) of said formwork (2) over several levels (Li) of pre-established heights,
an electronic control unit (9) configured so as to:
a) control, by said handling means (8), the movement of said unloading device (4) and said spray device (7) along said predetermined path (PA) in at least one forward direction (A1),
b) control said unloading device (4), during said movement, so that the granular compounds contained in said containment compartments are laid on an underlying approximately horizontal plane inside said internal forming chamber (3) so as to form on said plane a series of stratiform granular strips (Vi) of the granular compounds which extend in the internal chamber (3) parallel and coplanar to each other along said predetermined path (PA), one alongside the other so as to form on said plane a granular layer (Si), which is approximately horizontal and has a width corresponding approximately to the width of said internal chamber (3);
c) control said spray device (7) during said movement, in order to selectively spray said stratiform granular strips (Vi) of said granular layer (Si), with said liquid agents, so as to selectively harden/set said stratiform granular strips (Vi) of the granular layer (Si) on the basis of the wall structure (100a) contained in said 3D digital model,
d) control, by said handling means (8), the vertical movement of said unloading device (4) and of said spray device (7) within said internal chamber (3) on the basis of the wall structure (100a) contained in said 3D digital model, for arranging them over a vertical level (li) having a height higher than the previous level
e) repeatedly control the operations a), b), c) and d), on the basis of the wall (100a) to be built envisaged in the 3D digital model, until it is completed.

2. The system according to claim 1, wherein the system comprises said 3D digital model comprising at least one multilayer wall consisting of a plurality of vertical layers (Ti) lying in vertical planes parallel to each other and are made on the basis of respective granular materials, at least two of which are different from each other,
said containment compartments (5) of the unloading device (4) contain respective granular materials corresponding to the granular materials of said vertical layers (Ti) of the at least one multilayer wall, and have the corresponding openings (6) which are sized on the basis of the thicknesses of said vertical layers (Ti),
said spray device (7) comprises a plurality of tanks (22) containing respective liquid agents which are designed to harden/set the granular materials of said vertical layers (Ti) of the vertical wall (100a) to be built, said electronic control unit (9) is configured so as to:
b1) control said unloading device (4) during said movement, so as to lay said granular compounds on the underlying horizontal plane so as to form said horizontal granular layer (Si) composed of said plurality of stratiform granular strips (Vi) on the basis of the respective vertical layers (Ti) of the at least one multilayer wall envisaged in the 3D digital model,
c1) control said spray device (7) during said movement to selectively spray said stratiform strips (Vi) so as to cause the hardening/setting of the stratiform strips (Vi) on the basis of the respective vertical layers (Ti) of the at least one multilayer wall to be built as envisaged in the 3D digital model,
d1) control, by said handling means (8), the vertical movement of said unloading device (4) and of said spray device (7) within said formwork (2) so as to arrange them over a vertical level (Li) having a height higher than the previous one on the basis of the at least one multilayer wall envisaged in the 3D digital model,
e1) repeatedly control the operations a1), b1), c1) and d1), on the basis of the multilayer wall to be built envisaged in the 3D digital model, until it is completed.

3. The system according to claim 2, wherein the at least one multilayer wall of the 3D digital model comprises at least one through-opening and/or at least one internal cavity,
said electronic control unit (9) is also configured so as to
c2) control said spray device (7) during said movement so as to selectively stop the spraying of said liquid agents on the stratiform strips (Vi), which are positioned in the at least one multilayer wall of the 3D digital model at said through-opening and/or at the internal cavity to be made, so as not to cause the hardening/setting of the relative granular materials of said granular layer (Si).

4. The system according to claim 2, wherein said at least one multilayer wall of the 3D digital model extends along an annular path (PA),
said formwork (2) extends continuously along said annular path (PA) and delimits an internal annular forming chamber (3),
said electronic control unit (9) is also configured so as to:
f) control, by said handling means (8), the movement of said unloading device (4) and of said spray device (7) along said annular path (PA) so that said unloading device (4) and said spray device (7) perform a plurality of turns within said internal forming chamber (3) on the basis of the at least one multilayer wall of the 3D digital model, during each turn, an approximately horizontal granular layer (Si) is made which is laid on top of an underlying approximately horizontal granular layer (Si-1), made during the previous turn.

5. The system according to any one of the preceding claims, wherein said formwork (2) is formed of at least two containment walls (2a) which extend vertically from a horizontal plane (PB) and are arranged facing and parallel to each other at a mutual distance, transverse to said forward direction (A1), corresponding approximately to the width of the vertical wall (100a) to be built; said containment walls (2a) are modular and comprise a plurality of modular panels (2c) structured to be easily assembled/dismantled/removed.

6. The system according to claim 5, wherein said formwork (2) also comprises a panel support structure (2c) which is defined by a modular scaffolding (10) of the type that can be easily assembled/disassembled.

7. The system according to any one of the preceding claims, wherein said unloading device (4) comprises adjustment means (20) structured for closing/opening said unloading openings (6) so as to control the amounts of the granular compounds which are unloaded from said containment compartments (5) onto said plane.

8. The system according to claim 7, wherein the openings (6) of the containment compartments (5) of the unloading device (8) are selectively controlled by respective adjustment elements (20) so as to adjust the amount of granular compound unloaded from each containment compartment (5) .

9. The system according to claim 8, wherein said electronic control unit (9) is configured so as to selectively control said adjustment elements (20) in order to control/adjust the amount of granular compound unloaded from each containment compartment (5) on the basis of the granulometry of the granular compound.

10. The system according to any one of the preceding claims, wherein said spray device (7) comprises a plurality of nozzles which are hydraulically connected to respective tanks (22), and a plurality of solenoid valves which are coupled to the nozzles and are selectively operated to open and/or close the respective nozzle.

11. The system according to any one of the preceding claims, wherein said handling means (8) comprise tracks (12) which are mounted on said formwork (2) within said internal forming chamber (3); said unloading device (4) and said spray device (7) are mounted on said tracks (12) to be moved, independently of each other, along said predetermined path (PA) at least in said forward direction (A1).

12. A method for automatically building at least one vertical wall (100a) of a building on the basis of a structure of the vertical wall (100a) contained in a 3D digital model defining said vertical wall (100a),
said method is **characterised in that** it comprises the following steps:
creating, on a support plane (PB), an approximately vertical formwork (2) that delimits an internal forming chamber (3) for forming said wall (100a) and has a width corresponding approximately to the width of said vertical wall (100a), the formwork (2) extends over the support plane (PB) along a predetermined path (PA) corresponding to the horizontal extension of said vertical wall (100a),
arranging an unloading device (4) in said internal forming chamber (3), the unloading device (4) is provided with a number of containment compartments (5) which are separate and independent of each other and contain respective granular compounds designed to build said vertical wall (100a), the containment compartments (5) have relative openings (6) for unloading said granular compounds into said internal chamber (3),
arranging a spray device (7) in said internal forming chamber (3), the spray device (7) comprises a plurality of containment tanks (22) containing respective liquid agents designed to react with said granular compounds to cause their setting/hardening; said spray device (7) is configured to spray, on command and selectively, said liquid agents,
I) controlling, by handling means (8), the movement of said unloading device (4) and of said spray device (7) along said predetermined path (PA) in at least one forward direction (A1),
II) controlling said unloading device (4) during said movement, so that the granular compounds are laid in said containment compartments on an underlying approximately horizontal plane so as to form on said plane a series of stratiform granular strips (Vi) of granular compounds which extend in the internal chamber (3) parallel and coplanar to each other along said predetermined path (PA), one alongside each other so as to form on said plane a granular layer (Si) which is approximately horizontal and has a width corresponding approximately to the width of said internal chamber (3)
III) controlling said spray device (7) during said movement, so as to selectively spray said stratiform granular strips (Vi), by using said liquid agents, so as to cause the hardening/setting of the stratiform granular strips (Vi) of the granular layer (Si) on the basis of the structure of the vertical wall (100a) contained in said 3D digital model,
IV) controlling, by said handling means (8), the vertical movement of said unloading device (4) and of said spray device (7) within said internal chamber (3) on the basis of the structure of the vertical wall (100a) contained in said 3D digital model so as to arrange them over a vertical level (Li) having a height higher than the previous level,
V) repeating the operations I), II), III) and IV), on the basis of the wall to be built as envisaged in the 3D digital model, until it is completed.

13. The method according to claim 12, wherein
said structure of the wall contained in said 3D digital model comprises at least one multilayer wall consisting of a plurality of vertical layers (Ti) lying in planes vertical and parallel to one another and made on the basis of respective granular materials, at least two of which are different from each other,
said containment compartments (5) of the unloading device (4) contain respective granular materials corresponding to the granular materials of said vertical layers (Ti) of the at least multilayer wall, and have corresponding openings which are sized on the basis of the thicknesses of said vertical layers (Ti),
said spray device (7) comprises a plurality of tanks (22) containing respective liquid agents which are designed to harden/set the granular materials of said vertical layers (Ti) of the vertical wall (100a) to be built,
said method comprises the following steps:
I-1) controlling said unloading device (4) during said movement so as to selectively lay said granular compounds on an underlying approximately horizontal plane so as to form said granular layer (Si) composed of a plurality of granular stratiform strips (Vi) on the basis of the respective vertical layers (Ti) of the at least one multilayer wall contained in the 3D digital model,
II-1) controlling said spray device (7) during said movement, so as to selectively spray said stratiform strips (Vi) thus causing the hardening/setting of the stratiform strips (Vi) on the basis of the respective vertical layers (Ti) of the at least one multilayer wall in the 3D digital model,
III-1) controlling, by said handling means (8), the vertical movement of said unloading device (4) and of said spray device (7) within said internal chamber (3) so as to arrange them on a vertical level (Li) having a higher height than the previous level on the basis of the at least one multilayer wall envisaged in the 3D digital model,
IV-1) repeating the operations I-1), II-1), III-1) and IV-1), on the basis of the multilayer wall to be built envisaged in the 3D digital model, until it is completed.

14. The method according to claim 12 or 13, wherein the structure of the vertical wall (100a) contained in the 3D digital model comprises at least one through-opening and/or at least one internal cavity,
said method comprises the steps of:
controlling said spray device (7) during said movement, so as to selectively stop the spraying of said liquid agents on the stratiform strips (Vi), which are positioned in the wall of the 3D digital model at said through-opening and/or internal cavity to be made, so as not to cause the hardening/setting of the relative granular materials.

15. The method according to any one of the claims 12 to 14, wherein said structure of the vertical wall (100a) contained in the 3D digital model extends along an annular path (PA),
said formwork (2) extends continuously along said annular path (PA) and delimits an internal annular forming chamber (3), said method comprises the step of controlling, by said handling means (8), the movement of said unloading device (4) and of said spray device (7) along said annular path (PA) so that said unloading device (4) and said spray device (7) perform a plurality of turns inside said internal forming chamber (3) on the basis of the structure of the vertical wall contained in the the 3D digital model, during which an approximately horizontal granular layer (Si) is made, which is laid over an underlying granular layer made during the previous turn.

## Patentansprüche

1. System (1) zum automatischen Aufbau mindestens einer vertikalen Wand (100a) eines Gebäudes basierend auf einem digitalen 3D-Modell, das die vertikale Wand (100a) definiert, wobei das System **dadurch gekennzeichnet ist, dass** es Folgendes umfasst:
eine etwa vertikale Schalung (2), die eine innere Formungskammer (3) zum Formen der Wand (100a) begrenzt und eine Breite aufweist, die etwa der Breite der vertikalen Wand (100a) entspricht, wobei sich die Schalung (2) entlang eines vorbestimmten Pfades (PA) erstreckt, der der horizontalen Ausdehnung der vertikalen Wand (100a) entspricht,
eine Entladevorrichtung (4), die in der inneren Formungskammer (3) angeordnet und mit einer Anzahl von voneinander getrennten und unabhängigen Fächern (5) versehen ist, die entsprechende granulare Verbindungen enthalten, die zum Aufbau der vertikalen Wand (100a) entworfen sind und entsprechende Öffnungen (6) zum Entladen der granularen Verbindungen in die innere Kammer (3) aufweisen,
eine Sprühvorrichtung (7), die in der inneren Kammer (3) angeordnet ist und eine Vielzahl von Auffangbehältern (22) umfasst, die entsprechende flüssige Mittel enthalten, die dazu entworfen sind, mit den granularen Verbindungen zu reagieren, um deren Abbindung/Härtung zu bewirken; die Sprühvorrichtung (7) so konfiguriert ist, dass sie auf Befehl und selektiv die flüssigen Mittel versprüht,
Handhabungsmittel (8), die entworfen sind zum:
selektiven Bewegen der Entladevorrichtung (4) und der Sprühvorrichtung (7) innerhalb der inneren Kammer (3) der Schalung (2) entlang des vorbestimmten Pfades (PA), und
vertikalen und selektiven Bewegen der Entladevorrichtung (4) und der Sprühvorrichtung (7) innerhalb der inneren Kammer (3) der Schalung (2) über mehrere Ebenen (Li) mit vorher festgelegten Höhen,
eine elektronische Steuereinheit (9), die konfiguriert ist zum:
a) Steuern der Bewegung der Entladevorrichtung (4) und der Sprühvorrichtung (7) entlang des vorgegebenen Pfades (PA) in mindestens einer Vorwärtsrichtung (AI) durch die Handhabungsmittel (8),
b) Steuern der Entladevorrichtung (4) während der Bewegung, sodass die in den Aufnahmefächern enthaltenen granularen Verbindungen auf eine darunter liegende, etwa horizontale Ebene innerhalb der inneren Kammer (3) gelegt werden, um auf dieser Ebene eine Reihe von schichtförmigen granularen Streifen (Vi) der granularen Verbindungen zu bilden, die sich in der inneren Kammer (3) parallel und koplanar zueinander entlang des vorbestimmten Pfades (PA) erstrecken, nebeneinander verlaufen, um auf der Ebene eine granulare Schicht (Si) zu bilden, die etwa horizontal ist und eine Breite aufweist, die etwa der Breite der inneren Kammer (3) entspricht;
c) Steuern der Sprühvorrichtung (7) während dieser Bewegung,
um die schichtförmigen granularen Streifen (Vi) der granularen Schicht (Si) selektiv mit den flüssigen Mitteln zu besprühen, um die schichtförmigen körnigen Streifen (Vi) der granularen Schicht (Si) basierend auf der in dem digitalen 3D-Modell enthaltenen Wandstruktur (100a) selektiv zu härten/festzusetzen,
d) Steuern der vertikalen Bewegung der Entladevorrichtung (4) und der Sprühvorrichtung (7) innerhalb der inneren Kammer (3) durch die Steuermittel (8) basierend auf der Wandstruktur (100a), die in dem digitalen 3D-Modell enthalten ist, um sie auf einer vertikalen Ebene (li) anzuordnen, die eine höhere Höhe als die vorherige Ebene aufweist
e) wiederholtes Steuern der Vorgänge a), b), c) und d) basierend auf der im digitalen 3D-Modell vorgesehenen zu errichtenden Wand (100a) bis zu deren Fertigstellung.

2. System nach Anspruch 1, wobei das System das digitale 3D-Modell umfasst, das mindestens eine mehrschichtige Wand umfasst, die aus einer Vielzahl von vertikalen Schichten (Ti) besteht, die in vertikalen Ebenen parallel zueinander liegen und basierend auf entsprechenden granularen Materialien hergestellt sind, von denen mindestens zwei voneinander verschieden sind,
die Aufnahmefächer (5) der Entladevorrichtung (4) jeweilige granulare Materialien enthalten, die den granularen Materialien der vertikalen Schichten (Ti) der mindestens einen mehrschichtigen Wand entsprechen, und die
entsprechenden Öffnungen (6) aufweisen, die basierend auf den Dicken der vertikalen Schichten (Ti) dimensioniert sind, die Sprühvorrichtung (7) eine Vielzahl von Behältern (22) umfasst, die jeweilige flüssige Mittel enthalten, die dazu bestimmt sind, die granularen Materialien der vertikalen Schichten (Ti) der zu errichtenden vertikalen Wand (100a) zu härten/festzusetzen,
die elektronische Steuereinheit (9) konfiguriert ist zum:
b1) Steuern der Entladevorrichtung (4) während der Bewegung, um die granularen Verbindungen auf die darunter liegende horizontale Ebene zu legen, um die horizontale körnige Schicht (Si) zu bilden, die aus der Vielzahl von schichtförmigen granularen Streifen (Vi) basierend auf den jeweiligen vertikalen Schichten (Ti) der mindestens einen mehrschichtigen Wand besteht, die in dem digitalen 3D-Modell vorgesehen ist,
c1) Steuern der Sprühvorrichtung (7) während der Bewegung, um die schichtförmigen Streifen (Vi) selektiv zu besprühen, um die Aushärtung/Erhärtung der schichtförmigen Streifen (Vi) basierend auf den jeweiligen vertikalen Schichten (Ti) der mindestens einen zu errichtenden mehrschichtigen Wand zu bewirken, wie es im digitalen 3D-Modell vorgesehen ist,
d1) Steuern der vertikalen Bewegung der
Entladevorrichtung (4) und der Sprühvorrichtung (7) innerhalb der Schalung (2) durch die Steuermittel (8), um sie auf einer vertikalen Ebene (Li) anzuordnen, die eine höhere Höhe als die vorherige aufweist, und zwar basierend auf der mindestens einen mehrschichtigen Wand, die in dem digitalen 3D-Modell vorgesehen ist,
e1) wiederholtes Steuern der Vorgänge a1), b1), c1) und d1) basierend auf der zu errichtenden mehrschichtigen Wand, die im digitalen 3D-Modell vorgesehen ist, bis zur Fertigstellung.

3. System nach Anspruch 2, wobei die mindestens eine mehrschichtige Wand des digitalen 3D-Modells mindestens eine Durchgangsöffnung und/oder mindestens einen inneren Hohlraum umfasst, wobei die elektronische Vorrichtung (9) auch so konfiguriert ist, dass sie
c2) die Sprühvorrichtung (7) während der Bewegung so steuert, dass sie das Sprühen der flüssigen Mittel auf die schichtförmigen Streifen (Vi) selektiv stoppt, die in der mindestens einen mehrschichtigen Wand des digitalen 3D-Modells an der Durchgangsöffnung und/oder an dem herzustellenden inneren Hohlraum positioniert sind, zu stoppen, um das Aushärten/Erhärten der entsprechenden granularen Materialien der granularen Schicht (Si) nicht zu verursachen.

4. System nach Anspruch 2, wobei sich die mindestens eine mehrschichtige Wand des digitalen 3D-Modells entlang eines ringförmigen Pfades (PA) erstreckt,
die Schalung (2) sich kontinuierlich entlang des ringförmigen Pfades (PA) erstreckt und eine innere ringförmige Schalungskammer (3) abgrenzt, die elektronische Steuereinheit (9) auch konfiguriert ist zum:
f) Steuern der Bewegung der Entladevorrichtung (4) und der Sprühvorrichtung (7) entlang des ringförmigen Pfades (PA) durch das Steuermittel (8), sodass die Entladevorrichtung (4) und die Sprühvorrichtung (7) eine Vielzahl von Umdrehungen innerhalb der inneren Kammer (3) basierend auf der mindestens einen mehrschichtigen Wand des digitalen 3D-Modells durchführen, wobei während jeder Umdrehung eine etwa horizontale granulare Schicht (Si) hergestellt wird, die auf eine darunter liegende etwa horizontale granulare Schicht (Si-1) gelegt wird, die während der vorherigen Umdrehung hergestellt wurde.

5. System nach einem der vorstehenden 10 Ansprüche, wobei die Schalung (2) aus mindestens zwei Behälterwänden (2a) gebildet wird, die sich von einer horizontalen Ebene (PB) aus vertikal erstrecken und einander gegenüberliegend und parallel zueinander in einem gegenseitigen Abstand quer zur Vorwärtsrichtung (AI) angeordnet sind, der etwa der 15 Breite der zu errichtenden vertikalen Wand (100a) entspricht; die Behälterwände (2a) modular sind und eine Vielzahl von modularen Platten (2c) umfassen, die so strukturiert sind, dass sie leicht montiert/demontiert/entfernt werden können.

6. System nach Anspruch 5, wobei die 20 Schalung (2) auch eine Panelstützstruktur (2c) umfasst, die durch ein modulares Gerüst (10) des Typs definiert ist, der leicht montiert/demontiert werden kann.

7. System nach einem der vorstehenden Ansprüche, wobei die Entladevorrichtung (4) 25 Steuermittel (20) umfasst, die zum Schließen/Öffnen der Entladeöffnungen (6) strukturiert sind, um die Mengen der granularen Verbindungen zu steuern, die aus den Aufnahmefächern (5) auf die Ebene entladen werden.

8. System nach Anspruch 7, wobei die Öffnungen (6) der Aufnahmefächer (5) der Entladevorrichtung (8) selektiv durch entsprechende Einstellelemente (20) gesteuert werden, um die Menge der aus jedem Aufnahmefach (5) entladenen granularen Verbindung einzustellen.

9. System nach Anspruch 8, wobei die elektronische Steuereinheit (9) so konfiguriert ist, dass sie die Einstellelemente (20) selektiv steuert, um die Menge der aus jedem Aufnahmefach (5) entladenen granularen Verbindung basierend auf der Granulometrie der granularen Verbindung zu steuern/einzustellen.

10. System nach einem der vorstehenden Ansprüche, wobei die Sprühvorrichtung (7) eine Vielzahl von Düsen umfasst, die hydraulisch mit entsprechenden Behältern (22) verbunden sind, und eine Vielzahl von Magnetventilen, die mit den Düsen gekoppelt sind und selektiv betätigt werden, um die jeweilige Düse zu öffnen und/oder zu schließen.

11. System nach einem der vorstehenden Ansprüche, wobei die Handhabungsmittel (8) Schienen (12) umfassen, die an der Schalung (2) innerhalb der inneren Kammer (3) angebracht sind; die Entladevorrichtung (4) und die Sprühvorrichtung (7) auf den Schienen (12) montiert sind, um unabhängig voneinander entlang des vorgegebenen Pfades (PA) mindestens in Vorwärtsrichtung (A1) bewegt zu werden.

12. Verfahren zum automatischen Aufbau mindestens einer vertikalen Wand (100a) eines Gebäudes basierend auf einer Struktur der vertikalen Wand (100a), die in einem digitalen 3D-Modell enthalten ist, das die vertikale Wand (100a) definiert, wobei das Verfahren **dadurch gekennzeichnet ist, dass** es die folgenden Schritte umfasst:
Erzeugen einer etwa vertikalen Schalung (2) auf einer Stützebene (PB), die eine innere Kammer (3) zum Formen der Wand (100a) begrenzt und eine Breite aufweist, die etwa der Breite der vertikalen Wand (100a) entspricht, wobei sich die Schalung (2) über die Stützebene (PB) entlang eines vorbestimmten Pfades (PA) erstreckt, der der horizontalen Ausdehnung der vertikalen Wand (100a) entspricht, Anordnen einer Entladevorrichtung (4) in der inneren Kammer (3), wobei die Entladevorrichtung (4) eine Anzahl von Aufnahmefächern (5) aufweist, die voneinander getrennt und unabhängig sind und jeweilige granulare Verbindungen enthalten, die zum Aufbau der vertikalen Wand (100a) bestimmt sind, wobei die Aufnahmefächer (5) entsprechende Öffnungen (6) zum Entladen der granularen Verbindungen in die innere Kammer (3) aufweisen,
Anordnen einer Sprühvorrichtung (7) in der inneren Kammer (3), wobei die Sprühvorrichtung (7) eine Vielzahl von Auffangbehältern (22) umfasst, die jeweils flüssige Mittel enthalten, die dazu bestimmt sind, mit den granulären Verbindungen zu reagieren, um deren Erhärtung/Aushärtung zu bewirken, die Sprühvorrichtung (7) so konfiguriert ist, dass sie auf Befehl und selektiv die flüssigen Mittel versprüht,
I) Steuern der Bewegung der Entladevorrichtung (4) und der Sprühvorrichtung (7) entlang des vorgegebenen Pfades (PA) in mindestens einer Vorwärtsrichtung (A1) durch Handhabungsmittel (8),
II) Steuern der Entladevorrichtung (4) während der Bewegung, sodass die granularen Verbindungen in den Aufnahmefächern auf einer darunter liegenden, etwa horizontalen Ebene abgelegt werden, um auf dieser Ebene eine Reihe von schichtförmigen granularen Streifen (Vi) aus granularen Verbindungen zu bilden, die sich in der inneren Kammer (3) parallel und koplanar zueinander entlang des vorbestimmten Pfades (PA) erstrecken, und zwar nebeneinander, um auf dieser Ebene eine granulare Schicht (Si) zu bilden, die etwa horizontal ist und eine Breite aufweist, die etwa der Breite der inneren Kammer (3) entspricht
III) Steuern der Sprühvorrichtung (7) während der Bewegung, um die schichtförmigen granularen Streifen (Vi) unter Verwendung der flüssigen Mittel selektiv zu besprühen, um die Aushärtung/Erhärtung der schichtförmigen granularen Streifen (Vi) der granularen Schicht (Si) basierend auf der in dem digitalen 3D-Modell enthaltenen Struktur der vertikalen Wand (100a) zu bewirken,
IV) Steuern der vertikalen Bewegung der Entladevorrichtung (4) und der Sprühvorrichtung (7) innerhalb der inneren Kammer (3) durch die Steuermittel (8) basierend auf der Struktur der vertikalen Wand (100a), die in dem digitalen 3D-Modell enthalten ist, um sie über einer vertikalen Ebene (Li) anzuordnen, die eine höhere Höhe als die vorherige Ebene aufweist,
V) Wiederholen der Arbeitsschritte I), II), III) und IV) basierend auf der zu bauenden Wand, wie sie im digitalen 3D-Modell vorgesehen ist, bis sie fertig ist.

13. Verfahren nach Anspruch 12, wobei die in dem digitalen 3D-Modell enthaltene Wandstruktur mindestens eine mehrschichtige Wand umfasst, die aus einer Vielzahl von vertikalen Schichten (Ti) besteht, die in vertikalen und zueinander parallelen Ebenen liegen und basierend auf entsprechenden granularen Materialien hergestellt sind, von denen mindestens zwei voneinander verschieden sind,
die Aufnahmefächer (5) der Entladevorrichtung (4) jeweils granulare Materialien enthalten, die den granularen Materialien der vertikalen Schichten (Ti) der mindestens mehrschichtigen Wand entsprechen, und entsprechende Öffnungen aufweisen, die basierend auf den Dicken der vertikalen Schichten (Ti) dimensioniert sind,
die Sprühvorrichtung (7) eine Vielzahl von Behältern (22) umfasst, die jeweils flüssige Mittel enthalten, die dazu bestimmt sind, die granularen Materialien der vertikalen Schichten (Ti) der zu errichtenden vertikalen Wand (100a) zu härten/festzusetzen,
das Verfahren die folgenden Schritte umfasst:
I-1) Steuern der Entladevorrichtung (4) während der Bewegung, um die granulare Verbindung selektiv auf eine darunter liegende, etwa horizontale Ebene zu legen, um die granulare Verbindung (Si) zu bilden, die aus einer Vielzahl von granularen schichtförmigen Streifen (Vi) basierend auf den jeweiligen vertikalen Schichten (Ti) der mindestens einen mehrschichtigen Wand besteht, die in dem digitalen 3D-Modell enthalten ist,
II-1) Steuern der Sprühvorrichtung (7) während der Bewegung, um die schichtförmigen Streifen (Vi) selektiv zu besprühen und so die Aushärtung/Erhärtung der schichtförmigen Streifen (Vi) basierend auf den jeweiligen vertikalen Schichten (Ti) der mindestens einen mehrschichtigen Wand in dem digitalen 3D-Modell zu bewirken,
III-1) Steuern der vertikalen Bewegung der Entladevorrichtung (4) und der Sprühvorrichtung (7) innerhalb der inneren Kammer (3) durch die Steuermittel (8), um sie auf einer vertikalen Ebene (Li) anzuordnen, die eine größere Höhe als die vorherige Ebene aufweist, und zwar basierend auf der mindestens einen mehrschichtigen Wand, die in dem digitalen 3D-Modell vorgesehen ist,
IV-1) Wiederholen der Vorgänge 1-1), II-I), III-I) und IV- 1) basierend auf der zu errichtenden mehrschichtigen Wand, die im digitalen 3D-Modell vorgesehen ist, bis diese fertig ist.

14. Verfahren nach Anspruch 12 oder 13, wobei die in dem digitalen 3D-Modell enthaltene Struktur der vertikalen Wand (100a)
mindestens eine Durchgangsöffnung und/oder mindestens einen inneren Hohlraum umfasst,
das Verfahren die folgenden Schritte umfasst:
Steuern der Sprühvorrichtung (7) während der Bewegung, um das Sprühen der flüssigen Mittel auf die schichtförmigen Streifen (Vi), die in der Wand des digitalen 3D-Modells an der herzustellenden Durchgangsöffnung und/oder dem inneren Hohlraum positioniert sind, selektiv zu stoppen, um die Aushärtung/Erhärtung der entsprechenden granularen Materialien nicht zu verursachen.

15. Verfahren nach einem der Ansprüche 12 bis 14, wobei sich die Struktur der vertikalen Wand (100a), die in dem digitalen 3D-Modell enthalten ist, entlang eines ringförmigen Pfades (PA) erstreckt,
die Schalung (2) sich kontinuierlich entlang des ringförmigen Pfades (PA) erstreckt und eine innere ringförmige Formungskammer (3) begrenzt, wobei das Verfahren den Schritt der Steuerung durch die Handhabungsmittel (8) umfasst, die Bewegung der Entladevorrichtung (4) und der Sprühvorrichtung (7) entlang des ringförmigen Pfades (PA), sodass die Entladevorrichtung (4) und die Sprühvorrichtung (7) eine Vielzahl von Umdrehungen innerhalb der inneren Kammer (3) basierend auf der Struktur der vertikalen Wand, die in dem digitalen 3D-Modell enthalten ist, durchführen, während derer eine etwa horizontale granulare Schicht (Si) hergestellt wird, die über eine darunter liegende granulare Schicht gelegt wird, die während der vorherigen Umdrehung hergestellt wurde.

## Revendications

1. Système (1) destiné à construire automatiquement au moins une paroi verticale (100a) d'un bâtiment sur la base d'un modèle numérique 3D définissant ladite paroi verticale (100a), ledit système est **caractérisé en ce qu'il** comprend :
un coffrage (2) approximativement vertical qui délimite une chambre de formage interne (3) pour le formage de ladite paroi (100a) et dont la largeur correspond approximativement à la largeur de ladite paroi verticale (100a), le coffrage (2) s'étend le long d'une trajectoire prédéterminée (PA) correspondant à l'extension horizontale de ladite paroi verticale (100a),
un dispositif de déchargement (4) qui est disposé dans ladite chambre de formage interne (3) et est pourvu d'un nombre de compartiments de confinement (5) séparés et indépendants les uns des autres, qui contiennent des composés granulaires respectifs conçus pour construire ladite paroi verticale (100a) et ont des ouvertures relatives (6) pour le déchargement desdits composés granulaires dans ladite chambre interne (3),
un dispositif de pulvérisation (7) qui est disposé dans ladite chambre interne (3) et comprend une pluralité de réservoirs de confinement (22) contenant des agents liquides respectifs conçus pour réagir avec lesdits composés granulaires afin de provoquer leur fixation/durcissement ; ledit dispositif de pulvérisation (7) est configuré pour pulvériser, sur commande et de manière sélective, lesdits agents liquides,
des moyens de manutention (8) qui sont conçus pour :
déplacer sélectivement ledit dispositif de déchargement (4) et ledit dispositif de pulvérisation (7) à l'intérieur de ladite chambre de formage interne (3) dudit coffrage (2) le long de ladite trajectoire prédéterminée (PA), et
déplacer verticalement et sélectivement ledit dispositif de déchargement (4) et ledit dispositif de pulvérisation (7) à l'intérieur de la chambre de formage interne (3) dudit coffrage (2) sur plusieurs niveaux (Li) de hauteurs préétablies,
une unité de commande électronique (9) configurée de manière à :
a) commander, par lesdits moyens de manutention (8), le déplacement dudit dispositif de déchargement (4) et dudit dispositif de pulvérisation (7) le long de ladite trajectoire prédéterminée (PA) dans au moins une direction avant (A1),
b) commander ledit dispositif de déchargement (4), pendant ledit déplacement, de manière à ce que les composés granulaires contenus dans lesdits compartiments de confinement soient posés sur un plan sous-jacent approximativement horizontal à l'intérieur de ladite chambre de formage interne (3) de manière à former, sur ledit plan, une série de bandes granulaires stratiformes (Vi) des composés granulaires qui s'étendent dans la chambre interne (3) parallèlement et coplanairement l'une à l'autre le long de ladite trajectoire prédéterminée (PA), l'une à côté de l'autre de manière à former sur ledit plan une couche granulaire (Si), qui est approximativement horizontale et a une largeur correspondant approximativement à la largeur de ladite chambre interne (3) ;
c) commander ledit dispositif de pulvérisation (7) pendant ledit déplacement,
afin de pulvériser sélectivement lesdites bandes granulaires stratiformes (Vi) de ladite couche granulaire (Si), avec lesdits agents liquides, de manière à durcir/fixer sélectivement lesdites bandes granulaires stratiformes (Vi) de la couche granulaire (Si) sur la base de la structure de paroi (100a) contenue dans ledit modèle numérique 3D,
d) commander, par lesdits moyens de manutention (8), le déplacement vertical dudit dispositif de déchargement (4) et dudit dispositif de pulvérisation (7) à l'intérieur de ladite chambre interne (3) sur la base de la structure de paroi (100a) contenue dans ledit modèle numérique 3D, pour les disposer sur un niveau vertical (li) ayant une hauteur supérieure au niveau précédent
e) commander, de manière répétée, les opérations a), b), c) et d), sur la base de la paroi (100a) à construire envisagée dans le modèle numérique 3D, jusqu'à ce qu'elle soit achevée.

2. Système selon la revendication 1, dans lequel le système comprend ledit modèle numérique 3D comprenant au moins une paroi multicouche constituée d'une pluralité de couches verticales (Ti) reposant sur des plans verticaux parallèles les uns aux autres et sont réalisées à partir de matériaux granulaires respectifs, dont au moins deux sont différents l'un de l'autre,
lesdits compartiments de confinement (5) du dispositif de déchargement (4) contiennent des matériaux granulaires respectifs correspondant aux matériaux granulaires desdites couches verticales (Ti) de l'au moins une paroi multicouche, et ont les ouvertures (6) correspondantes qui sont dimensionnées en fonction de l'épaisseur desdites couches verticales (Ti),
ledit dispositif de pulvérisation (7) comprend une pluralité de réservoirs (22) contenant des agents liquides respectifs qui sont conçus pour durcir/fixer les matériaux granulaires desdites couches verticales (Ti) de la paroi verticale (100a) à construire,
ladite unité de commande électronique (9) est configurée de manière à :
b1) commander ledit dispositif de déchargement (4) pendant ledit déplacement, de manière à poser lesdits composés granulaires sur le plan horizontal sous-jacent de manière à former ladite couche granulaire horizontale (Si) composée de ladite pluralité de bandes granulaires stratiformes (Vi) sur la base des couches verticales respectives (Ti) de l'au moins une paroi multicouche envisagée dans le modèle numérique 3D,
c1) commander ledit dispositif de pulvérisation (7) pendant ledit déplacement pour pulvériser sélectivement lesdites bandes stratiformes (Vi) de manière à provoquer le durcissement/la fixation des bandes stratiformes (Vi) sur la base des couches verticales respectives (Ti) de l'au moins une paroi multicouche à construire telle qu'envisagée dans le modèle numérique 3D,
d1) commander, par lesdits moyens de manutention (8), le déplacement vertical dudit dispositif de déchargement (4) et dudit dispositif de pulvérisation (7) à l'intérieur dudit coffrage (2) de manière à les disposer sur un niveau vertical (Li) ayant une hauteur supérieure au précédent sur la base de l'au moins une paroi multicouche envisagée dans le modèle numérique 3D,
e1) commander à plusieurs reprises les opérations a1), b1), c1) et d1), sur la base de la paroi multicouche à construire envisagée dans le modèle numérique 3D, jusqu'à ce qu'elle soit achevée.

3. Système selon la revendication 2, dans lequel l'au moins une paroi multicouche du modèle numérique 3D comprend au moins une ouverture traversante et/ou au moins une cavité interne, ladite unité de commande électronique (9) est également configurée de manière à
c2) commander ledit dispositif de pulvérisation (7) pendant ledit déplacement afin d'arrêter sélectivement la pulvérisation desdits agents liquides sur les bandes stratiformes (Vi), qui sont positionnées dans l'au moins une paroi multicouche du modèle numérique 3D au niveau de ladite ouverture traversante et/ou de la cavité interne à réaliser, de manière à ne pas provoquer le durcissement/la fixation des matériaux granulaires relatifs de ladite couche granulaire (Si).

4. Système selon la revendication 2, dans lequel ladite au moins une paroi multicouche du modèle numérique 3D s'étend le long d'une trajectoire annulaire (PA),
ledit coffrage (2) s'étend de manière continue le long de ladite trajectoire annulaire (PA) et délimite une chambre de formage annulaire interne (3), ladite unité de commande électronique (9) est également configurée de manière à :
f) commander, par lesdits moyens de manutention (8), le déplacement dudit dispositif de déchargement (4) et dudit dispositif de pulvérisation (7) le long de ladite trajectoire annulaire (PA) de manière à ce que ledit dispositif de déchargement (4) et ledit dispositif de pulvérisation (7) effectuent une pluralité de tours à l'intérieur de ladite chambre de formage interne (3) sur la base de l'au moins une paroi multicouche du modèle numérique 3D, au cours de chaque tour, une couche granulaire approximativement horizontale (Si) est fabriquée et posée sur une couche granulaire approximativement horizontale sous-jacente (Si-1), fabriquée au cours du tour précédent.

5. Système selon l'une quelconque des revendications précédentes, dans lequel ledit coffrage (2) est formé d'au moins deux parois de confinement (2a) qui s'étendent verticalement à partir d'un plan horizontal (PB) et sont disposées face et parallèlement l'une à l'autre à une distance mutuelle, transversale à ladite direction d'avancement (A1), correspondant approximativement à la largeur de la paroi verticale (100a) à construire ; lesdites parois de confinement (2a) sont modulaires et comprennent une pluralité de panneaux modulaires (2c) structurés pour être facilement assemblés/démontés/enlevés.

6. Système selon la revendication 5, dans lequel ledit coffrage (2) comprend également une structure de support de panneau (2c) qui est définie par un échafaudage modulaire (10) du type qui peut être facilement assemblé/désassemblé.

7. Système selon l'une quelconque des revendications précédentes, dans lequel ledit dispositif de déchargement (4) comprend des moyens d'ajustement (20) structurés pour fermer/ouvrir lesdites ouvertures de déchargement (6) de manière à commander les quantités des composés granulaires qui sont déchargés desdits compartiments de confinement (5) sur ledit plan.

8. Système selon la revendication 7, dans lequel les ouvertures (6) des compartiments de confinement (5) du dispositif de déchargement (8) sont commandées sélectivement par des éléments d'ajustement respectifs (20) de manière à ajuster la quantité de composé granulaire déchargé de chaque compartiment de confinement (5).

9. Système selon la revendication 8, dans lequel ladite unité de commande électronique (9) est configurée de manière à commander sélectivement lesdits éléments d'ajustement (20) afin de commander/ajuster la quantité de composé granulaire déchargée de chaque compartiment de confinement (5) sur la base de la granulométrie du composé granulaire.

10. Système selon l'une quelconque des revendications précédentes, dans lequel ledit dispositif de pulvérisation (7) comprend une pluralité de buses qui sont reliées hydrauliquement à des réservoirs respectifs (22), et une pluralité de vannes électromagnétiques couplées aux buses et sont actionnées sélectivement pour ouvrir et/ou fermer la buse respective.

11. Système selon l'une quelconque des revendications précédentes, dans lequel lesdits moyens de manutention (8) comprennent des rails (12) qui sont montés sur ledit coffrage (2) à l'intérieur de ladite chambre de formage interne (3) ; ledit dispositif de déchargement (4) et ledit dispositif de pulvérisation (7) sont montés sur lesdits rails (12) pour être déplacés, indépendamment les uns des autres, le long de ladite trajectoire prédéterminée (PA) au moins dans ladite direction avant (A1).

12. Procédé de construction automatique d'au moins une paroi verticale (100a) d'un bâtiment sur la base d'une structure de la paroi verticale (100a) contenue dans un modèle numérique 3D définissant ladite paroi verticale (100a), ledit procédé est **caractérisé en ce qu'il** comprend les étapes suivantes :
la création, sur un plan de support (PB), d'un coffrage (2) approximativement vertical qui délimite une chambre de formage interne (3) pour le formage de ladite paroi (100a) et a une largeur correspondant approximativement à la largeur de ladite paroi verticale (100a), le coffrage (2) s'étend sur le plan de support (PB) le long d'une trajectoire prédéterminée (PA) correspondant à l'extension horizontale de ladite paroi verticale (100a),
la disposition d'un dispositif de déchargement (4) dans ladite chambre de formage interne (3), le dispositif de déchargement (4) est pourvu d'un nombre de compartiments de confinement (5) qui sont séparés et indépendants les uns des autres et qui contiennent des composés granulaires respectifs conçus pour construire ladite paroi verticale (100a), les compartiments de confinement (5) ont des ouvertures relatives (6) pour décharger lesdits composés granulaires dans ladite chambre interne (3),
la disposition d'un dispositif de pulvérisation (7) dans ladite chambre de formage interne (3), le dispositif de pulvérisation (7) comprend une pluralité de réservoirs de confinement (22) contenant des agents liquides respectifs conçus pour réagir avec lesdits composés granulaires afin de provoquer leur fixation/durcissement ; ledit dispositif de pulvérisation (7) est configuré pour pulvériser, sur commande et de manière sélective, lesdits agents liquides,
I) la commande, par des moyens de manutention (8), du déplacement dudit dispositif de déchargement (4) et dudit dispositif de pulvérisation (7) le long de ladite trajectoire prédéterminée (PA) dans au moins une direction vers l'avant (A1),
II) la commande dudit dispositif de déchargement (4) pendant ledit déplacement, de manière à ce que les composés granulaires soient posés dans lesdits compartiments de confinement sur un plan sous-jacent approximativement horizontal de manière à former, sur ledit plan, une série de bandes granulaires stratiformes (Vi) de composés granulaires qui s'étendent dans la chambre interne (3) parallèlement et coplanairement les unes aux autres le long de ladite trajectoire prédéterminée (PA), les unes à côté des autres de manière à former sur ledit plan une couche granulaire (Si) qui est approximativement horizontale et a une largeur correspondant approximativement à la largeur de ladite chambre interne (3)
III) la commande dudit dispositif de pulvérisation (7) pendant ledit déplacement, de manière à pulvériser sélectivement lesdites bandes granulaires stratiformes (Vi), en utilisant lesdits agents liquides, de manière à provoquer le durcissement/la fixation des bandes granulaires stratiformes (Vi) de la couche granulaire (Si) sur la base de la structure de la paroi verticale (100a) contenue dans ledit modèle numérique 3D,
IV) la commande, par lesdits moyens de manutention (8), du déplacement vertical dudit dispositif de déchargement (4) et dudit dispositif de pulvérisation (7) à l'intérieur de ladite chambre interne (3) sur la base de la structure de la paroi verticale (100a) contenue dans ledit modèle numérique 3D de manière à les disposer sur un niveau vertical (Li) ayant une hauteur supérieure au niveau précédent,
V) la répétition des opérations I), II), III) et IV), sur la base de la paroi à construire telle qu'envisagée dans le modèle numérique 3D, jusqu'à ce qu'elle soit achevée.

13. Procédé selon la revendication 12, dans lequel ladite structure de la paroi contenue dans ledit modèle numérique 3D comprend au moins une paroi multicouche constituée d'une pluralité de couches verticales (Ti) reposant dans des plans verticaux et parallèles les uns aux autres et réalisées à base de matériaux granulaires respectifs, dont au moins deux sont différents l'un de l'autre,
lesdits compartiments de confinement (5) du dispositif de déchargement (4) contiennent des matériaux granulaires respectifs correspondant aux matériaux granulaires desdites couches verticales (Ti) de la paroi au moins multicouche, et ont des ouvertures correspondantes qui sont dimensionnées sur la base des épaisseurs desdites couches verticales (Ti),
ledit dispositif de pulvérisation (7) comprend une pluralité de réservoirs (22) contenant des agents liquides respectifs qui sont conçus pour durcir/fixer les matériaux granulaires desdites couches verticales (Ti) de la paroi verticale (100a) à construire,
ledit procédé comprend les étapes suivantes :
I-1) la commande dudit dispositif de déchargement (4) pendant ledit déplacement de manière à poser sélectivement lesdits composés granulaires sur un plan sous-jacent approximativement horizontal de manière à former ladite couche granulaire (Si) composée d'une pluralité de bandes stratiformes granulaires (Vi) sur la base des couches verticales respectives (Ti) de l'au moins une paroi multicouche contenue dans le modèle numérique 3D,
II-1) la commande dudit dispositif de pulvérisation (7) pendant ledit déplacement, de manière à pulvériser sélectivement lesdites bandes stratiformes (Vi), provoquant ainsi le durcissement/la fixation des bandes stratiformes (Vi) sur la base des couches verticales respectives (Ti) de l'au moins une paroi multicouche dans le modèle numérique 3D,
III-1) la commande, par lesdits moyens de manutention (8), du déplacement vertical dudit dispositif de déchargement (4) et dudit dispositif de pulvérisation (7) à l'intérieur de ladite chambre interne (3) de manière à les disposer sur un niveau vertical (Li) ayant une hauteur supérieure au niveau précédent sur la base de l'au moins une paroi multicouche envisagée dans le modèle numérique 3D,
IV-1) la répétition des opérations 1-1), II-1), III-1) et IV-1) , sur la base de la paroi multicouche à construire envisagée dans le modèle numérique 3D, jusqu'à ce qu'elle soit achevée.

14. Procédé selon la revendication 12 ou 13, dans lequel la structure de la paroi verticale (100a) contenue dans le modèle numérique 3D comprend au moins une ouverture traversante et/ou au moins une cavité interne,
ledit procédé comprend les étapes consistant à :
commander ledit dispositif de pulvérisation (7) pendant ledit déplacement, de manière à arrêter sélectivement la pulvérisation desdits agents liquides sur les bandes stratiformes (Vi), qui sont positionnées dans la paroi du modèle numérique 3D au niveau de ladite ouverture traversante et/ou de la cavité interne à réaliser, de manière à ne pas provoquer le durcissement/la fixation des matériaux granulaires relatifs.

15. Procédé selon l'une quelconque des revendications 12 à 14, dans lequel ladite structure de la paroi verticale (100a) contenue dans le modèle numérique 3D s'étend le long d'une trajectoire annulaire (PA),
ledit coffrage (2) s'étend de manière continue le long de ladite trajectoire annulaire (PA) et délimite une chambre de formage annulaire interne (3), ledit procédé comprend l'étape consistant à commander, par lesdits moyens de manutention (8), le déplacement dudit dispositif de déchargement (4) et dudit dispositif de pulvérisation (7) le long de ladite trajectoire annulaire (PA) de sorte que ledit dispositif de déchargement (4) et ledit dispositif de pulvérisation (7) effectuent une pluralité de tours à l'intérieur de ladite chambre de formage interne (3) sur la base de la structure de la paroi verticale contenue dans le modèle numérique 3D, au cours de laquelle une couche granulaire approximativement horizontale (Si) est fabriquée, qui est posée sur une couche granulaire sous-jacente fabriquée au cours du tour précédent.
